# EUROPÄISCHE PATENTSCHRIFT

(11) **EP 0 650 995 B1**
(45) Veröffentlichungstag und Bekanntmachung des Hinweises auf die Patenterteilung: **05.01.2000**
(21) Anmeldenummer: 94116550.8
(22) Anmeldetag: 20.10.1994
(51) Int. Cl.: C08G 69/10, C08G 73/10

(54) **Verfahren zur Herstellung von Asparaginsäure-haltigen Polymeren**
Process for preparing aspartic acid polymers
Procédé pour la préparation de polymères à partir d'acide aspartique

(30) Priorität: 02.11.1993 DE 4337337; 21.07.1994 DE 4425951
(43) Veröffentlichungstag der Anmeldung: 03.05.1995
(60) Teilanmeldung: 99108290.0
(73) Patentinhaber: BAYER AG, 51368 Leverkusen (DE)
(72) Erfinder: Groth, Torsten, Dr., D-51061 Köln (DE); Joentgen, Winfried, Dr., D-50769 Köln (DE); Müller, Nikolaus, Dr., D-40789 Monheim (DE); Wagner, Paul, Dr., D-40597 Düsseldorf (DE); Traenckner, Hans-Joachim, Dr., D-51375 Leverkusen (DE); Jovcic, Dorde, D-51399 Burscheid (DE); Pirkl, Hans-Georg, Dr., D-50679 Köln (DE); Menzel, Thomas, Dr., D-40732 Hilden (DE); Liesenfelder, Ulrich, Dipl.-Ing., D-50670 Köln (DE); Leiberich, Ricarda, Dr., D-51069 Köln (DE)

(56) Entgegenhaltungen:
- EP-A- 0 256 366
- EP-A- 0 593 187
- EP-A- 0 650 995
- WO-A-94/15993
- DE-A- 4 300 020
- US-A- 2 459 964

## Beschreibung

Die Erfindung betrifft ein Verfahren zur kontinuierlichen Herstellung von Polymeren mit wiederkehrenden Succinyl-Einheiten, bei dem Maleinsäureanhydrid oder ein Derivat davon (Edukt A) mit Ammoniak, einer Ammoniak liefernden Verbindung oder Amiden der Kohlensäure (Edukt B) miteinander umgesetzt werden. Die PSI-haltigen Polymere können anschließend zu Asparaginsäure-haltigen Polymeren hydrolysiert werden. Durch Zusatz von Co-Monomeren können Co-Polymere von Polysuccinimid (PSI) hergestellt werden. Weiterhin betrifft die Erfindung ein kontinuierliches Verfahren zur Herstellung von Maleinamidsäure.

Die Herstellung und Verwendung von Polyasparaginsäure (PAS) und ihrer Derivate ist seit langem Gegenstand zahlreicher Veröffentlichungen und Patente.

Gemäß J. Org. Chem., 24, p. 1662-1666, (1959), wird Polysuccinimid, welches dort als "Anhydropolyasparaginsäure" bezeichnet wird, durch thermische Polykondensation von Maleinamidsäure, Äpfelsäuremonoammoniumsalz bei Temperaturen bis 200°C erhalten. Die Polymerausbeuten betrugen bei 200°C 75 % bis 79 %. Weiterhin werden als mögliche Einsatzstoffe Äpfelsäure, Maleinsäureanhydrid, Fumarsäure und Asparagin genannt.

Ebenso kann die Herstellung durch thermische Polykondensation von Asparaginsäure lt. J. Org. Chem. 26, 1084 (1961) erfolgen. Es tritt als Zwischenstufe zunächst das Polysuccinimid (PSI) auf, welches dort ebenfalls als "Anhydropolyasparaginsäure" bezeichnet wird. Durch Hydrolyse kann PSI in PAS überführt werden.

US-A 4 839 461 (= EP-A 0 256 366) beschreibt die Herstellung von Polyasparaginsäure aus Maleinsäureanhydrid, Wasser und Ammoniak. Maleinsäureanhydrid wird im wäßrigen Medium unter Zugabe von konzentrierter Ammoniaklösung in das Monoammoniumsalz umgewandelt und anschließend wird das Wasser aus der Lösung verdampft. Das Monoammoniumsalz wird in Substanz polymerisiert. Während dieser Polymerisation wird die Masse zunächst hochviskos und anschließend fest-porös, was ein verfahrenstechnisch aufwendiges Handling erfordert.

Aus US-A 4 590 260 ist bekannt, daß Aminosäuren zusammen mit Derivaten der Äpfel-, Malein- und/oder Fumarsäure bei 100 bis 225°C polykondensierbar sind. Gemäß US-A 4 696 981 lassen sich zur Durchführung einer derartigen Reaktion Mikrowellen erfolgreich einsetzen.

In DE-A 2 253 190 wird ein Verfahren zur Herstellung von Polyaminosäure-Derivaten, speziell Polyasparaginsäure-Derivaten, beschrieben. Danach werden neben Asparaginsäure auch Maleinsäure-Derivate (Monoammoniumsalz und Monoamid) zur Zwischenstufe PSI thermisch polymerisiert, welche anschließend in geeigneten Lösungsmitteln mit Aminen zu den gewünschen Polyaminosäure-Derivaten umgesetzt werden können.

US-A 5 296 578 beschreibt die Herstellung von PSI aus Maleinsäureanhydrid, Wasser und Ammoniak. Maleinsäureanhydrid wird in Wasser zu Maleinsäure hydrolysiert und anschließend mit konz. Ammoniaklösung in das Ammoniumsalz überführt. In einem Rührreaktor wird das Wasser aus der Lösung verdampft und anschließend das Monoammoniumsalz in Masse bei Temperaturen oberhalb von 170°C zu PSI polymerisiert. Hierbei wird die Masse in mehreren Stunden über hochviskose Phasenzustände hinweg zum festen PSI umgesetzt und anschließend zu PAS hydrolysiert.

US-A 5 288 783 beschreibt die Herstellung von PAS aus Maleinsäure oder Fumarsäure, Wasser und Ammoniak. Maleinsäureanhydrid wird mit Wasser im Rührkessel vermischt und unter Kühlen zu Maleinsäure umgesetzt. Durch Zugabe von konz. Ammoniaklösung wird das Maleinsäuremonoammoniumsalz hergestellt. Anschließend wird das enthaltene Wasser verdampft und das trockene Monoammoniumsalz bei Temperaturen von 190 bis 350°C polymerisiert. Alternativ wird vorgeschlagen, das in wäßriger Lösung vorliegende Monoammoniumsalz bei Temperaturen von 160 bis 200°C durch Extrusion zu PSI weiter zu verarbeiten. Das auf einem der beiden Verfahrenswegen hergestellte PSI wird anschließend alkalisch zu PAS hydrolysiert.

EP-A 593 187 beschreibt die Herstellung von PSI durch therm. Polymerisation von Maleinamidsäure bei Temperaturen von 160 bis 330°C bei einer Reaktionsdauer von 2 Minuten bis 6 Stunden. Es wird auch auf die Polykondensation im Lösumgsmittel unter Verwendung von Kondensationshilfsmitteln hingewiesen.

DE-A 4 221 875 beschreibt die Herstellung von modifizierten Polyasparaginsäuren durch Polykondensation und ihre Verwendung als Zusätze für Waschmittel, Reinigungsmittel, Wasserbehandlungsmittel und Belagsverhinderer beim Eindampfen von Zuckern. WO-A-94/15993 (veröffentlicht am 21.07.1994) und EP-A-0633281 (veröffentlicht am 11.01.1995) beschreiben die Herstellung von PAS durch therm. Polymerisation.

Dieses Anwendungsspektrum von PAS ist schon aus weiteren Patenten bekannt. So läßt sich PAS gemäß EP-A 256 366 (= US-A 4 839 461) zur Vermeidung und Entfernung von Verkrustungen durch Härtebildner ("Scale Inhibition" und "Scale Deposition Removal") einsetzen. Gemäß US-A 5 116 513, EP-A 391 629 und EP-A 454 126 sind PAS und ihre Salze wirksame Bestandteile in Wasch- und Reinigungsmitteln. Ebenfalls wird PAS als Knochenersatzmaterial in EP-A 383 568 genannt.

Die bekannten Verfahren stellen zunächst weitgehend isotherm in Rührkesseln das Ausgangsprodukt für die thermische Polymerisation zu PSI und ähnlichen Stoffen her und polymerisieren anschließend in Substanz bei Temperaturen zwischen 140 und 350°C in langen Zeiten (zumeist in mehreren Stunden) oder in Lösungsmitteln. Als Edukte werden Maleinsäure, Maleinsäureanhydrid, Fumarsäure oder Maleinamidsäure, sowie Wasser und Ammoniak verwendet. Als Zwischenprodukt der PSI-Herstellung wird zumeist das Monoammoniumsalz der Maleinsäure genannt. Die beschriebenen Verfahren sind verfahrenstechnisch aufwendig bezüglich des Handlings der viskosen Phase bei der thermischen Polymerisation oder erfordern reaktionsfremde Hilfsstoffe zur thermischen Polymerisation, die anschließend vom Produkt PSI oder vom zu PAS hydrolysierten PSI entfernt werden müssen. Weiterhin führen diese Verfahren wegen des Handling-Aufwands zu großen Verweilzeiten in der Reaktionszone. Die lange thermische Belastung kann zu Folge- und Nebenreaktionen, wie z. B. zu Decarboxylierungen, führen. Insbesondere sind die vorgeschlagenen Verfahren energetisch ungünstig.

Es bestand somit die Aufgabe, ein neues Verfahren zur kontinuierlichen Herstellung von Polymeren mit wiederkehrenden Succinyl-Einheiten zu entwickeln, welches verfahrenstechnisch kostengünstig, d.h. einfach und unter weitgehender Nutzung der Reaktionswärme des Primärreaktionsschrittes, eine schnelle thermische Polymerisation möglichst unter Vermeidung von reaktionsfremden Hilfsstoffzusätzen, die anschließend aufwendig abgetrennt werden müssen, gewährleistet. Zusätzlich sollte die Reaktionszeit insgesamt gegenüber dem Stand der Technik deutlich verringert und durch die kontinuierliche Fahrweise eine gleichbleibende Qualität garantiert werden.

Die Erfindung geht aus von einem Verfahren zur Herstellung von Polymeren mit wiederkehrenden Succinyl-Einheiten, bei dem Maleinsäureanhydrid oder ein Derivat davon (Edukt A) mit Ammoniak, einer Ammoniak liefernden Verbindung oder Ammoniumsalzen oder Amiden der Kohlensäure (Edukt B) zu einem N-haltigen niedermolekularen Derivat der Maleinsäure in einem ersten exothermen Reaktionsschritt zu einem N-haltigen niedermolekularen Derivat der Maleinsäure umgesetzt werden und dieses Derivat in einem darauffolgenden zweiten Reaktionsschritt polymerisiert wird.

Die erfindungsgemäße Lösung der oben angegebenen Aufgabe ist dadurch gekennzeichnet, daß die Reaktion der Edukte (A, B) im ersten Reaktionsschritt adiabatisch erfolgt und die dabei freigesetzte Reaktionswärme eingesetzt wird, um im zweiten Reaktionsschritt das N-haltige niedermolekulare Derivat unter Erhalt eines Polymeren mit wiederkehrenden Succinyl-Einheiten zu polymerisieren.

Als Edukt A bevorzugt sind neben Maleinsäureanhydrid auch Maleinsäure, Fumarsäure oder Äpfelsäure.

Als Edukte B sind neben Ammoniak bevorzugt eine Ammoniak liefernde Verbindung, insbesondere Ammoniumhydrogencarbonat oder Diammoniumcarbonat oder Ammoniumsalze und Amide der Kohlensäure wie Harnstoff, Isoharnstoff (Ammoniumcyanat), Carbamidsäure oder Ammoniumcarbamid geeignet. Diese Edukte können einzeln oder in Gemischen in Substanz oder Lösung eingesetzt werden.

Maleinsäureanhydrid oder ihre Derivate werden in einer bevorzugten Ausführungsform als Schmelze eingesetzt.

Die Umsetzung der Edukte kann gegebenenfalls in Gegenwart eines Lösungsmittels durchgeführt werden. Als Lösungsmittel geeignet sind Wasser, polar aprotische Lösungsmittel, wie Dimethylformamid, N-Alkylpyrrolidon, Sulfolan, Aceton etc. Polyalkylenglykole, Polyalkylenglykolmonoalkylether und Polyalkylenglykoldialkylether. Ebenfalls geeignet sind überkritische Gase, wie z. B. Kohlendioxid. Besonders geeignet ist Wasser.

In einer bevorzugten Ausführungsform sind die Edukte geschmolzenes Maleinsäureanhydrid (Edukt A) und Ammoniaklösung, insbesondere eine wäßrige Ammoniaklösung (Edukt B).

Maleinsäureanhydrid bzw. Derivate davon werden als Edukt A vorzugsweise in solchen Mengen eingesetzt, daß das molare Verhältnis von Stickstoff im Edukt B relativ zum Maleinsäureanhydrid oder einem Derivat davon im Edukt A zwischen 0,1 und 5,0, bevorzugt zwischen 0,5 und 4,0 und ganz besonders bevorzugt zwischen 0,9 und 3,0, liegt.

Der erste Reaktionsschritt ist eine schnelle Reaktion, in deren Folge bei unspezifischer Reaktionsführung durch Parallel- und Folgereaktionen unerwünschte Nebenprodukte entstehen können.

Die Verminderung von unerwünschten Nebenprodukten bei komplexen Reaktionssystemen von vielen Parallel- und Folgereaktionen durch die Mikromischung der Edukte, die schneller geschehen muß als die Edukte miteinander reagieren, ist in der Literatur bekannt (Ullmann: Encyclopedia of Industrial Chemistry, 1992, Vol. B2, Chap. 24; J.R. Bourne, H. Maire: Chem. Eng. Process 30 (1991) 23 - 30 ).

Liegen die chemischen Reaktionsgeschwindigkeiten und die Vermischungsgeschwindigkeiten der Edukte in der gleichen Größenordnung, so kommt es zu einer komplexen Wechselwirkung zwischen den Reaktionen und dem lokalen, von der Turbulenz bestimmten Vermischungsverhalten im Reaktor und am Mischorgan. Sind die Reaktionsgeschwindigkeiten sogar wesentlich schneller als die Mischgeschwindigkeiten, so werden die Ausbeuten deutlich durch die Vermischung, d.h. durch das lokale Geschwindigkeits- und Konzentrationsfeld der Reaktanden und somit von der Reaktorkonstruktion und Turbulenzstruktur, beeinflußt (s. z.B. R.S. Brodkey, Turbulence in Mixing Operations - Theory and Application to Mixing and Reaction, Academic Press, N.Y. 1975).

Geeignete Vorrichtungen zur genügend schnellen Vermischung zweier Flüssigströme sind aus vielen Literaturangaben und Patenten bekannt (z.B. Ullmann: Encyclopedia of Industrial Chemistry, 1982, Vol. B2, Chap. 25; Vol. B4, 561-586; Perry's Chemical Engineers' Handbook, 6. ed. (1984), Mc-Graw-Hill, N.Y., 21-61; M.H. Pohl, E. Muschelknautz, Chem. Ing. Tech. 51 (1979), 347-364; Chem. Ing. Tech. 52 (1980), 295-291.)

Bevorzugte Vorrichtungen zur schnellen Vermischung der Eduktströme sind alle Arten von
a) Strahlmischern,
b) statischen Mischern,
c) dynamischen Mischern.

Besonders bevorzugte Vorrichtungen zur schnellen Vermischung der Edukte und zum Starten der exothermen Reaktion stellen Strahlmischer dar, deren weitere Vorteile bei der hermetischen Dichtheit, der variabel einstellbaren Mischenergie und der globalen plug-flow-Charakteristik liegen.

In einer bevorzugten Ausführungsform werden die Edukte bei der Durchführung des 1. Reaktionsschrittes zur Verminderung von unerwünschten Nebenreaktionen in einem schnell vermischenden Apparat der obengenannten Bauart gemischt und parallel bzw. danach die exotherme Bildung der Zwischenprodukte durchgeführt.

Die dabei freiwerdende Wärme wird in dem Edukt-Zwischenprodukt-Gemisch im wesentlichen gespeichert. Dadurch wird das Reaktionsgemisch auf Polymerisationstemperatur gebracht und gegebenenfalls das organische Lösungsmittel oder das Wasser sowie bei der Reaktion entstehendes Wasser ganz oder zumindest teilweise verdampft.

In einer besonders bevorzugten Ausführungsform erfolgt die Mischung in < 2 s und die exotherme Bildung der Zwischenprodukte in weniger als 60 s.

Das aus der ersten Reaktionsstufe austretende Reaktionsgemisch wird anschließend in einem geeigneten Apparat zur Polymerisation gebracht.

Für die thermische Polymerisation eignen sich grundsätzlich alle Apparate, die bei einer engen Verweilzeitverteilung der viskos-flüssigen Phase die notwendige Mindestverweilzeit zur Polymerisation und gleichzeitig eine zumindest partielle Verdampfung des Lösungsmittels, insbesondere des Wassers, sowie des bei der Reaktion gebildeten Wassers ermöglichen.

Bei der bekannten PSI-Herstellung aus Maleinsäure oder einem Derivat davon mit Ammoniak, gasförmig oder flüssig, Harnstoff, Isoharnstoff, Ammoniumcyanat, Carbamidsäure, Ammoniumcarbamid, Ammoniumhydrogencarbonat, Diammoniumcarbonat und Gemischen der vorgenannten Stoffe in Substanz oder in Lösung, insbesondere in wäßriger Lösung, entsteht ein komplexes Reaktionssystem mit vielen Parallel- und Folgereaktionen. Zur Maximierung der Produktausbeute und damit zur Verminderung von unerwünschten Polymerbestandteilen bei einem solchen komplexen Reaktionssystem mit unerwünschten Parallel- und Folgereaktionen ist prinzipiell bekannt, daß die Mikromischung der Edukte schneller geschehen muß, als die Edukte miteinander reagieren (z.B. K.H. Tebel, H.-O. May: Chem.-Ing.-Tech. 60 (1988) und MS 1708/88; J.R Bourne, H. Maire: Chem. Eng. Process. 30 (1991) S. 23ff; R.S. Brodkey: Chem. Eng. Commun. 8 (1981) S.1ff).

Weiterhin sollte zum Aufbau von Polymerketten mit gleichmäßiger Kettenlänge die thermische Polymerisation möglichst in für alle Moleküle gleicher Verweilzeit unter möglichst identischen Reaktionsbedingungen durchgeführt werden. Geeignete Reaktoren mit engem Verweilzeitspektrum sind in der einschlägigen Literatur bekannt (z.B. Ullmann: Encyclopedia of Industrial Chemistry, 1992, Vol. B4, 97-20).

Bevorzugte Vorrichtungen zur thermischen Polymerisation sind also alle Apparate, die eine definierte Verweilzeit mit einer engen Verweilzeitverteilung für die feste oder hochviskosflüssige Phase aufweisen und gleichzeitig eine gute Temperierung durch ein zumindest partielles Verdampfen des Lösungsmittels (org. Lösungsmittel und/oder Wasser) und/oder des bei der Polymerisation gebildeten Reaktionswassers ermöglichen. Solche bevorzugten Vorrichtungen können beispielsweise sein
a) Verweilrohre,
b) Hochviskosreaktoren (z. B. Schnecke, List-Reaktor),
c) Trockner (z. B. Schaufeltrockner, Sprühtrockner),
d) Rührkesselkaskade,
e) Dünnschichtverdampfer,
f) Mehrphasen-Wendelrohr-Reaktoren (MPWR) (DT 1 667 051, DE 219 967).

Beonders gute Ergebnisse werden erzielt, wenn die Edukte (A, B) einem Strahlmischer zugeführt werden, dem ein Rohrreaktor oder ein MPWR nachgeschaltet ist. Diese Apparatekombination hat sich zur Durchführung des erfindungsgemäßen Verfahrens besonders bewährt.

Zur Kontrolle der Reaktortemperatur der durchgeführten Reaktionen kann eine vollständige oder auch partielle Kreisführung des Reaktionsgemisches in Kombination mit Wärmabfuhr erfolgen. Für eine solche Reaktionsführung eignen sich insbesondere alle Reaktoren obengenannter Bauart mit Rückführung des Reaktionsgemisches in Kombination mit Wärmeabfuhr sowie alle Schlaufenreaktoren.

In einer weiteren Variante des erfindungsgemäßen Verfahrens kann zur Vermeidung eines zu schnellen und starken Temperaturanstiegs des Reaktionsgemisches aufgrund der sehr exothermen schnellen Maleinamidsäurebildungsreaktion eine Eduktkomponente an mehreren Stellen in geeigneter Weise entlang des Rohr- bzw. Mehrphasenwendelrohrreaktors eindosiert werden, so daß ein optimales Temperaturprofil erzielt werden kann. Dadurch wird vermieden, daß es zum Auftreten von Temperaturspitzen (Übertemperaturen) kommt, die zu Produktschädigungen führen können. Die Anzahl der zusätzlichen (ohne die Dosierung in die Mischdüse am Rohr- bzw. Mehrphasenwendelrohrreaktoreintritt) Dosierstellen liegt bevorzugt im Bereich von bis zu 10. Die Art der Zuspeisung wird so gewählt, daß eine gute Vermischung mit der Reaktionslösung erfolgt.

Die Vermischung der Edukte kann je nach den verwendeten Edukten bei Temperaturen zwischen 0°C und 200°C erfolgen. Die exotherme adiabatische Reaktion des ersten Reaktionsschritts liefert dann genügend Wärme, daß der zweite Reaktionsschritt dann je nach Art und Konzentration der verwendeten Edukte bei 120 bis 500°C, bevorzugt bei 140 bis 450°C und besonders bevorzugt bei 140 bis 400°C stattfinden kann. Vorteilhaft wird die Temperatur über den Druck im Reaktor und die Mengenströme der zugeführten Edukte (A, B), sowie den Gehalt an organischem Lösungsmittel und/oder Wasser eingestellt. Zur Unterstützung der Temperaturführung während der Reaktion können auch Kühl- und Heizmedien eingesetzt werden. Weiterhin können Produkt-Edukt-Bereiche mit unterschiedlichen Temperaturen im Reaktionssystem zwecks Wärmeaustausch direkt oder indirekt in Kontakt gebracht werden.

Die Verweilzeiten der obengenannten Edukte in dem früher beschriebenen Reaktorsystem betragen bis zu 120 Minuten. Bevorzugt sind Verweilzeiten von bis zu 30 Minuten. Besonders bevorzugt sind mit steigender Temperatur abnehmende Verweilzeiten, d. h. bei Temperaturen zwischen 120 und 200°C weniger als 30 Minuten; bei Temperaturen zwischen 200 bis 250°C weniger als 10 Minuten; bei Temperaturen zwischen 250 bis 300°C weniger als 5 Minuten; bei Temperaturen oberhalb von 300°C weniger als 2 Minuten.

Die Verweilzeit im Reaktorsystem wird vorzugsweise so gewählt, daß eine praktisch vollständige Umsetzung des im Unterschuß eingesetzten Edukts A, bevorzugt MSA, gewährleistet ist. Zur praktisch vollständigen Polymerisation kann es erforderlich sein, das bereits kurz nach der Vermischung in der ersten Reaktionsstrecke, besonders bevorzugt in einem Rohrreaktor, erhaltene Monomeren- und Oligomerengemisch in eine weitere oben vorgeschlagene Vorrichtung, bevorzugt einen Hochviskosreaktor, umzusetzen. Besonders bevorzugt kann jedoch auf-einen solchen Hochviskosreaktor verzichtet werden und es gelingt bereits in einem Verweilrohr, bevorzugt in einem MPWR, eine vollständige PSI-Bildung. Die erhaltenen Reaktionsprodukte sind je nach Wasser- bzw. Lösungsmittelgehalt wegen der freiwerdenden Reaktionsenthalpie heiße Lösungen oder lösungsmittelhaltige bzw. wasserhaltige Schmelzen. Die Reaktionsenthalpie kann weitgehend im Reaktor genutzt werden. Dadurch wird eine optimale Wärmeführung mit geringen Invest- und Betriebskosten einer verfahrenstechnischen Anlage erreicht, die zu einer hohen Wirtschaftlichkeit führt.

Beim Einsatz der PSI-Oligomer-haltigen Schmelzen in einem Hochviskosreaktor kann die Reaktionsgeschwindigkeit in einer bevorzugten Reaktionsführung im Gegensatz zur Direktsynthese aus den Edukten Maleinsäure-Ammoniumsalz oder Maleinamidsäure in einer solchen Vorrichtung durch die bereits vorgeheizten und aufgrund der freigesetzten Reaktionswärme partiell durch Verdampfen an Lösungsmittel verarmte viskose Masse erheblich gesteigert werden. Die Verweilzeit wird durch diese Verfahrensweise gegenüber dem Stand der Technik deutlich gesenkt.

Die nach dem erfindungsgemäßen Verfahren hergestellten Polymere weisen wiederkehrende Succinyl-Einheiten mit einer der folgenden Strukturen auf: 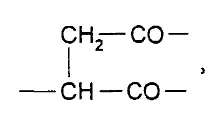 bevorzugt 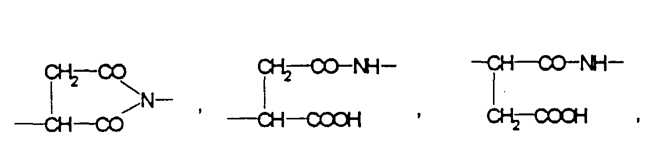 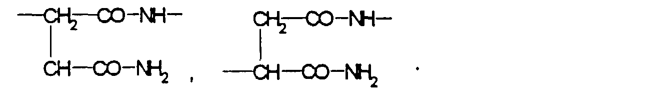 Zusätzlich können durch geeignete Reaktionsführung und Wahl der Edukte weitere wiederkehrende Einheiten enthalten sein, z. B.

### a) Äpfelsäure-Einheiten der Formel

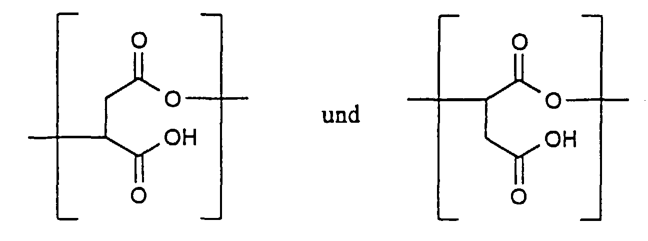

### b) Maleinsäure- und Fumarsäure-Einheiten der Formel

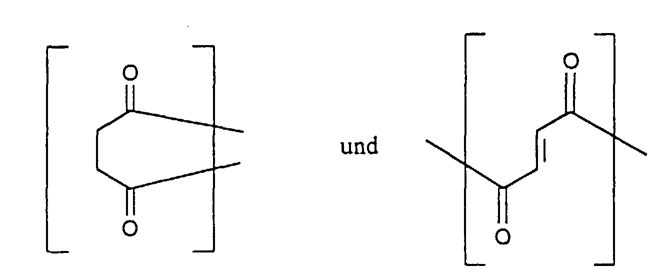

Die Analyse der chemischen Struktur erfolgt vorzugsweise mit ¹³C-NMR, FT-IR und nach Totalhydrolyse mit HPLC, GC und GC/MS.

Gemäß einer Weiterentwicklung der Erfindung kann die Struktur des erhaltenen Polysuccinimid durch das stöchiometrische Verhältnis der Edukte beeinflußt werden. Werden insbesondere die Edukte Maleinsäureanhydrid und Ammoniak bei einem molaren Überschuß von Ammoniak eingesetzt, so erhält man ein Polymer mit wiederkehrenden Succinyleinheiten:

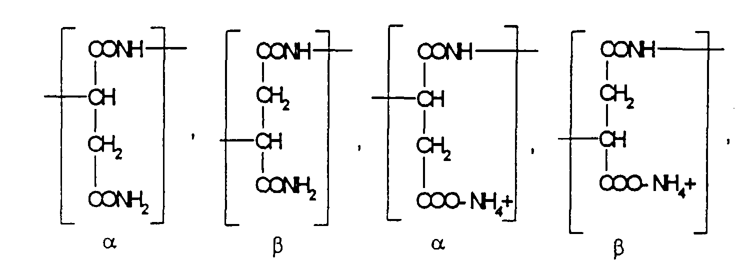

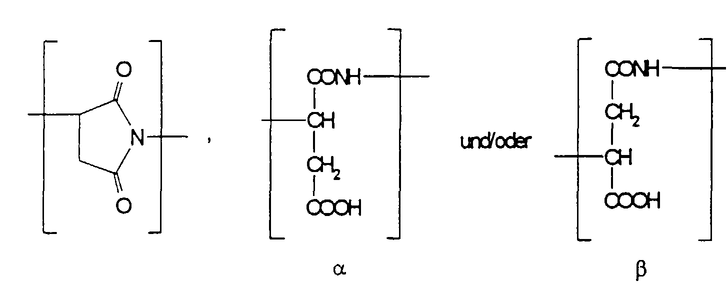

Vorzugsweise werden dabei pro Mol Maleinsäureanhydrid 1,8 bis 25,0, bevorzugt 2,0 bis 10,0 Mol, besonders bevorzugt 2 bis 5 Mol Ammoniak eingesetzt.

Die Polymerisationsprodukte können zur Umsetzung mit einer Base gegebenenfalls in Gegenwart von Wasser in ein PAS-haltiges Salz überführt werden. Diese Umwandlung von PSI-haltigen in PAS-haltige Polymere geschieht anschließend in einer geeigneten Vorrichtung durch Hydrolyse. Bevorzugt ist dabei ein pH-Wert zwischen 5 und 14 geeignet. In besonders bevorzugter Form wird ein pH-Wert von 7 bis 12 gewählt, insbesondere durch den Zusatz einer Base. Geeignete Basen sind Alkali- und Erdalkalihydroxide oder Carbonate wie beispielsweise Natronlauge, Kalilauge, Soda oder Kaliumcarbonat, Ammoniak und Amine wie Triethylamin, Triethanolamin, Diethylamin, Diethanolamin, Alkylamine etc..

Die Temperatur bei der Hydrolyse liegt geeigneter Weise in einem Bereich einschließlich bis zum Siedepunkt der PSI-Suspension und bevorzugt bei 20 bis 150°C. Die Hydrolyse wird gegebenenfalls unter Druck durchgeführt.

Es ist jedoch auch möglich, durch rein wäßrige Hydrolyse oder Behandlung des Salzes mit Säuren oder sauren Ionenaustauschern die freie Polyasparaginsäure zu erhalten. Der Begriff "Polyasparaginsäure" (= PAS) umfaßt bei der vorliegenden Erfindung ebenfalls die Salze, falls nicht ausdrücklich anders dargestellt. Das fertige Produkt wird durch Trocknung, bevorzugt Sprühtrocknung, erhalten.

Das hergestellte Polymer zeigt in Abhängigkeit von den Reaktionsbedingungen, beispielsweise Verweilzeit und Temperatur der thermischen Polymerisation unterschiedliche Kettenlängen bzw. Molekulargewichte nach gelpermeationschromatographischen Analysen (Mw = 500 bis 10.000, bevorzugt 700 bis 5.000, besonders bevorzugt 1.000 bis 4.500). Im allgemeinen liegt der Anteil der beta-Form bei mehr als 50 %, bevorzugt bei mehr als 70 %.

Die erfindungsgemäßen Polyasparaginsäuren können als Zusatz in phosphatarmen und phosphatfreien Wasch- und Reinigungsmitteln verwendet werden. Die Polymerisate sind Builder für Waschmittel und bewirken während des Waschvorgangs eine Verminderung der Inkrustrierung und Vergrauung auf dem gewaschenen Textilgut.

Weiterhin sind die erfindungsgemäßen Polyasparaginsäuren als Wasserbehandlungsmittel geeignet. Sie können dem Wasser in Kühlkreisläufen, Verdampfern oder Meerwasserentsalzungsanlagen zugesetzt werden. Außerdem können Sie als Belagsverhinderer bei der Eindampfung von Zuckersaft eingesetzt werden.

Aufgrund ihrer guten Dispergiereigenschaften eignen sich die erfindungsgemäßen Polyasparaginsäuren auch als Dispergiermittel für anorganische Pigmente und zur Herstellung hochkonzentrierter Feststoffdispersionen (slurries).

Ein weiterer Gegenstand der Erfindung ist die Herstellung modifizierter Polyasparaginsäuren, bei der man
a) 0,1 - 99,9 mol-% der vorhergenannten Edukte mit
b) 99,9 - 0,1 mol-%
an Fettsäuren, Fettsäureamiden, mehrbasischen Carbonsäuren, deren Anhydriden und Amiden, mehrbasischen Hydroxycarbonsäuren, deren Anhydriden und Amiden, Polyhydroxycarbonsäuren, Aminocarbonsäuren, Zuckercarbonsäuren, Alkoholen, Polyolen, Aminen, Polyaminen, alkoxylierten Alkoholen und Aminen, Aminoalkoholen, Aminozuckern, Kohlehydraten, ethylenisch ungesättigten Mono- und Polycarbonsäuren sowie deren Anhydriden und Amiden, Proteinhydrolysaten z.B. Mais-Proteinhydrolysat, Soja-Proteinhydrolysat, Aminosulfonsäuren und Aminophosphonsäuren nach dem oben beschriebenen erfindungsgemäßen Verfahren zur Reaktion bringt.

Die unter a) beschriebenen Edukte werden in der erfindungsgemäßen Polymerisation zu 0,1 bis 99,9 mol-%, vorzugsweise zu 60 bis 99,9 mol-% und besonders bevorzugt zu 75 bis 99,9 mol-%, eingesetzt.

Als Komponente (b) der Polymerisate kommen sämtliche Fettsäuren in Betracht. Sie können gesättigt oder ethylenisch ungesättigt sein. Beispiele sind Ameisensäure, Essigsäure, Propionsäure, Buttersäure, Laurinsäure, Palmitinsäure, Stearinsäure, Ölsäure, Linolsäure, Linolensäure, Sorbinsäure, Myristinsäure, Undecansäure sowie alle natürlich vorkommenden Fettsäuregemische, beispielsweise C₁₂/C₁₄-oder C₁₆/C₁₈-Fettsäuremischungen. Als ungesättigte Fettsäuren können auch Acrylsäure und Methacrylsäure eingesetzt werden.

Weiterhin können diese Säuren auch in Form ihrer Amide verwendet werden. Als mehrbasische Carbonsäuren können beispielweise Oxalsäure, Bernsteinsäure, Glutarsäure, Adipinsäure, Malonsäure, Korksäure, Aconitsäure, Itaconsäure, Sulfobernsteinsäure, Alkenylbernsteinsäuren (C₁-C₂₆), 1,2,3,-Propantricarbonsäure, Butantetracarbonsäure, Furandicarbonsäure, Pyridindicarbonsäure eingesetzt werden. Ebenfalls können die Anhydride von mehrbasischen Carbonsäuren z. B. Bernsteinsäureanhydrid, Itaconsäureanhydrid, Aconitsäure-anhydrid und Phtalsäureanhydrid verwendet werden. Weiter kommen als Komponente (b) auch mehrbasische Hydroxycarbonsäuren und Polyhydroxycarbonsäuren in Betracht. Mehrbasische Hydroxycarbonsäuren tragen neben mindestens einer Hydroxygruppe mindestens zwei oder mehr Carboxylgruppen. Als Beispiele sind hier Äpfelsäure, Weinsäure, Traubensäure, Citronensäure und Isocitronensäure genannt.

Einbasische Polyhydroxycarbonsäuren tragen neben einer Carbonsäuregruppe zwei oder mehr Hydroxygruppen, z.B. Glycerinsäure, Dimethylolpropionsäure, Dimethylolbuttersäure, Gluconsäure. Außerdem sind einwertige Alkohole mit beispielsweise 1 bis 22 C-Atomen wie z. B. Methanol, Ethanol, n-Propanol, 1-Propanol, Butanol, Pentanol, Hexanol, Octanol, Laurylakohol, Stearylalkohol etc. geeignet. Die Alkohole können auch gegebenenfalls eine Doppelbindung aufweisen, wie Allylalkohol oder Oleylalkohol. Weiterhin können diese Alkohole alkoxyliert sein, beispielsweise mit Ethylenoxid oder Propylenoxid. Von technischem Interesse sind vor allem die Addukte von 3 bis 50 mol Ethylenoxid an Fettalkohole oder Oxoalkohole. Weiterhin können als Komponente (b) Polyole entweder gesättigt oder ungesättigt eingesetzt werden, wie z. B. Ethylenglykol, Propylenglykol, Butandiol, Butendiol, Glycerin, Trimethylolpropan, Pentaerythrit, Sorbit, Neopentylglykol sowie alkoxylierte Polyole wie Polyethylenglykole, Polypropylenglykole, ethoxyliertes Trimethylolpropan, Glycerin oder Pentaerythrit mit Molekulargewichten bis zu 6000 eingesetzt werden. Des weiteren eignen sich als Comonomer (b) auch Amine wie C₁-C₂₂-Alkylamine, z. B. Methylamin, Ethylamin, Propylamin, Butylamin, Cyclohexylamin, Octylamin, Isooctylamin (Ethylhexylamin), Stearylamin, Allylamin, Oleylamin, Ethylendiamin, Diethylentriamin, Hexamethylendiamin, Piperazin, Diaminobutan, Dimethylamin, Diethylamin, Hydroxylamin, Hydrazin, Ethanolamin, Diethanolamin, Aminopropandiol, sowie Polyalkylenaminen wie Polyethylenamin mit Molekulargewichten bis 6000. Die Amine können auch alkoxyliert sein, z.B. die Anlagerungsprodukte von 3 bis 30 mol Ethylenoxid an Fettamine wie Oleylamin, Palmitylamin, oder Stearylamin. Weiterhin sind auch Aminozucker wie Aminosorbit oder Chitosamin geeignet. Außerdem sind als Komponente (b) Kohlenhydrate wie Glucose, Saccharose, Maltose, Dextrine, Stärke oder Zuckercarbonsäuren, beispielsweise Schleimsäure, Gluconsäure, Glucuronsäure, Glucarsäure. Außerdem können Aminosäuren, Proteinogene wie Glycin, Alanin, Glutaminsäure und Lysin oder nicht Proteinogene wie 4-Aminobuttersäure, Diaminobernsteinsäure, 11-Aminoundecansäure und 6-Aminocapronsäure als Komponente (b) eingesetzt werden. Die Verbindungen der Komponente (b) werden in Mengen von 0,1 bis 99,9 mol-%, vorzugsweise 0,1 bis 40 mol %, besonders bevorzugt 0,1 bis 25 mol-% zur Polymerisation eingesetzt. Man kann eine einzige Verbindung der Komponente (b) oder Mischungen aus zwei oder mehreren Verbindungen von (b) einsetzen. Die Verbindungen der Komponente (b) können im gewünschten Verhältnis mit einem der Hauptedukte (a) vermischt werden und als Gemisch in die erste Reaktionsstufe eingesetzt werden.

In einer anderen Ausführungsform werden die Verbindungen der Komponente (b) dem Reaktionsgemisch kurz nach der Vermischung der Hauptedukte (a) in einem frühen Stadium der Polymerisation zugesetzt. Ebenfalls ist es möglich die Verbindungen der Komponente (b) simultan mit den Hauptedukten (a) in das Mischersystem einzudosieren.

Werden als Komponente (b) monofunktionelle Verbindungen wie Alkohole, Amine, Fettsäuren oder Fettsäureamide verwendet, so werden sie am Kettenende eingebaut. Sie wirken als Kettenabbrecher und erniedrigen das Molekulargewicht. Mehrfunktionelle Verbindungen der Komponente (b) können im fertigen Polymer sowohl am Kettenende als auch statistisch verteilt über die Polymerkette eingebaut sein.

Die Rohpolymerisate können durch übliche Aufarbeitungsmethoden beispielsweise durch Extraktion mit Wasser und 1-N-Salzsäure oder durch Membranfiltration von monomeren Anteilen befreit werden. Die Analyse der Copolymere erfolgt durch ¹³C- und ¹⁵N-NMR-Spektroskopie, FT-IR-Spektroskopie und nach Totalhydrolyse mit HPLC, GC und GC-MS. Bei der erfindungsgemäßen Polymerisation fällt das Polymerisat primär in Form der zumeist wasserunlöslichen modifizierten Polysuccinimide an.

Die modifizierten Polyasparaginsäuren werden aus den Polysuccinimiden, vorzugsweise durch wässrige Hydrolyse bei 20°C bisl50°C und pH 7 bis 12, gegebenenfalls unter Druck hergestellt. Diese Reaktion läßt sich jedoch auch bei Temperaturen außerhalb des angegebenen Temperaturbereichs und bei anderen pH-Werten durchführen. Geeignete Basen sind Alkali und Erdalkalihydroxide oder Carbonate wie beispielsweise Natronlauge, Kalilauge, Soda oder Kaliumcarbonat, Ammoniak und Amine wie Triethylamin, Triethanolamin, Diethylamin, Diethanolamin, Alkylamine etc. Man erhält teilweise oder vollständig neutralisierte Copolymerisate, die 0,1 bis 99,9 mol-% Asparaginsäure und 99,9 bis 0,1 mol-% von mindestens einer Verbindung (b) einpolymerisiert enthalten.

Werden primäre Amine oder primäre Aminogruppen tragende Basen zur Hydrolyse verwendet, so können die entstehenden Aminsalze durch Dehydratisierung in die entsprechenden Amide überführt werden. Die Wasserabspaltung kann durch Tempern bei Temperaturen von 30°C bis 250°C, gegebenenfalls unterstützt durch Vakuum, erfolgen.

Die nach dem erfindungsgemäßen Verfahren hergestellten modifizierten Polyasparaginsäuren sind nach den "OECD Guidelines for testing of chemicals (1981)" als biologisch abbaubar einzustufen.

Die erfindungsgemäßen modifizierten Polyasparaginsäuren können als Zusatz in phosphatarmen und phosphatfreien Wasch- und Reinigungsmitteln verwendet werden. Die Polymerisate sind Builder für Waschmittel und bewirken während des Waschvorgangs eine Verminderung der Inkrustrierung und Vergrauung auf dem gewaschenen Textilgut.

Weiterhin sind die erfindungsgemäßen modifizierten Polyasparaginsäuren als Wasserbehandlungsmittel geeignet. Sie können dem Wasser in Kühlkreisläufen, Verdampfern oder Meerwasserentsalzungsanlagen zugesetzt werden. Außerdem können Sie als Belagsverhinderer bei der Eindampfung von Zuckersaft eingesetzt werden.

Aufgrund ihrer guten Dispergiereigenschaften eignen sich die erfindungsgemäßen modifizierten Polyasparaginsäuren auch als Dispergiermittel für anorganische Pigmente und zur Herstellung hochkonzentrierter Feststoffdispersionen (slurries).

Die Erfindung betrifft weiterhin ein Verfahren zur Herstellung von Maleinamidsäure, dadurch gekennzeichnet, daß Maleinsäureanhydrid oder ein Derivat davon (Edukt A) mit Ammoniak, einer Ammoniak liefernden Verbindung (Edukt B) in einem schnell vermischenden Apparat mit einer Mischzeit < 2 s, vorzugsweise in einem Strahlmischer, gemischt und in einem daran anschließenden Reaktor umgesetzt werden, wobei die Verweilzeit und die Temperatur so gewählt werden, daß keine oder nahezu keine Polymerisation stattfindet.

Es ist bereits bekannt, daß sich Maleinamidsäure durch Umsetzung von Maleinsäureanhydrid mit Ammoniak in inerten Lösungsmitteln herstellen läßt. So erhält man Maleinamidsäure durch Einleiten von Ammoniak in eine Lösung von Maleinsäureanhydrid in Xylol, Ethylenchlorid, Tetralin oder Dioxan bei 50 bis 100°C und Isolieren der ausgefallenen Amidsäure durch Filtration (US 2 459 964 / DE 847 287 / JP 49 035 325/ C.K. Sauers, R.J. Cotte, J. Org. Chem., 26,6 (1961). Diese Lösungsmittelverfahren haben den Nachteil, daß wegen der hohen Reaktionswärme in verdünnter Lösung gearbeitet werden muß, was das Abtrennen, Aufarbeiten und Rückführen größerer Lösungsmittelmengen mit sich bringt. Voraussetzung für dieses Verfahren ist ferner, daß das Maleinsäureanhydrid keine Malein- bzw. Fumarsäure enthält, das verwendete Lösungsmittel sowie das Ammoniakgas absolut trocken sind und daß unter Feuchtigkeitsausschluß gearbeitet wird. Nachteilig bei diesen Verfahren wirkt sich weiterhin aus, daß es an der Einleitungsstelle des Ammoniakgases zur Krustenbildung und Verstopfung des Einleitrohres kommen kann.

In der deutschen Patentschrift Nr. 945 987 wird ein Verfahren beschrieben, bei dem Maleinsäureanhydrid mit Ammoniak in Gegenwart oder Abwesenheit von Wasser zur Maleinamidsäure umgesetzt wird. Eine Variante besteht darin, gepulvertes Maleinsäureanhydrid in eine gekühlte 21 %ige wäßrige Ammoniaklösung einzutragen. Dies hat den Nachteil, daß während der Zugabe und Reaktion von außen gekühlt werden muß, da sonst eine merkliche Hydrolyse des MSA eintritt, aber selbst unter 10°C sind die Ausbeuteverluste beträchtlich. Die wäßrige Lösung des Ammoniumsalzes der Maleinsäure (Nebenprodukt) muß nach der Isolierung der Maleinamidsäure aufgearbeitet werden. Eine weitere Variante besteht in dem Begasen von gepulvertem Maleinsäureanhydrid mit Ammoniak. Hierbei muß für eine gute Durchmischung gesorgt sein, die bei Gas-Feststoffreaktionen mit erheblichen technischen Problemen verbunden ist; die Gaseinleitung muß relativ langsam erfolgen und es muß auch hier von außen gekühlt werden. Das Maleinsäureanhydrid muß in feingepulverter Form eingesetzt werden, was arbeitshygienisch nicht unbedenklich ist.

Das sowjetische Patent SU 362821 beschreibt die Umsetzung von Maleinsäureanhydrid mit Ammoniak in einer homogenen Dampfphase bei Temperaturen von 215 bis 350°C in Abwesenheit von Lösungsmitteln und Kontaktzeiten von 0,2 bis 1,0 s. Die Maleinamidsäure wird dabei aber nur in ca. 70 %iger Reinheit erhalten, so daß zur Erzielung reinen Produktes eine aufwendige Nachreinigung mit Verlusten und belasteten Abwässern notwendig wird.

Vorzugsweise werden dabei die Edukte gemischt und bei einer Temperatur von 20°C bis 250°C, vorzugsweise von 60°C bis 200°C, zu Maleinamidsäure umgesetzt. Das Überschreiten der Maximaltemperaturen wird vorzugsweise durch Entspannen und schnelles Abkühlen des Reaktionsgemisches verhindert. In einer bevorzugten Ausführungsform sind die Edukte geschmolzenes Maleinsäureanhydrid und eine wäßrige Ammoniaklösung oder Ammoniak, gelöst in einem organischen Lösungsmittel. Die Verweilzeit im Reaktor beträgt dabei 0,1 bis 200 s, vorzugsweise 0,1 bis 60 s. Vorteilhaft werden diese Edukte wiederum einem Strahlmischer zugeführt, dem ein Reaktor nachgeschaltet ist.

Es muß als ausgesprochen überraschend bezeichnet werden, daß Maleinamidsäure durch Verdüsen und schnelles Vermischen der Ausgangskomponenten MSA mit speziell wäßriger Ammoniaklösung in quantitativer Ausbeute und hoher Reinheit erhalten werden kann, ist doch bekannt, daß Maleinamidsäure in Gegenwart von Wasser schon bei niedrigen Temperaturen unter Bildung des Ammoniumsalzes der Maleinsäure hydrolysiert. Die schnelle Vermischung in Verbindung mit der hohen Reaktionsgeschwindigkeit zur Maleinamidsäure und schneller Abkühlung des Reaktionsgemisches führt dazu, daß verdüstes MSA nicht mit dem Wasser zur Maleinsäure hydrolysiert.

Mit der Erfindung werden folgende Vorteile erzielt:

Das erfindungsgemäße Verfahren ermöglicht die einfache Herstellung von Maleinamidsäure in hoher Ausbeute und Reinheit. Das Verfahren ist technisch ohne großen Aufwand durchführbar, nachgeschaltete Reinigungsschritte sind nicht notwendig; die Verwendung von organischen Lösungsmitteln, die wieder aufgearbeitet werden müssen, entfällt.

Die technische Durchführung erlaubt einen hohen Durchsatz, die Energiekosten durch externes Heizen oder Kühlen sind minimiert, was insgesamt zu einer deutlich verbesserten Wirtschaftlichkeit des Verfahrens führt.

Die nach dem erfindungsgemäßen Verfahren hergestellte Maleinamidsäure kann als Ausgangsmaterial für die Herstellung von Polysuccinimid (J. Org. Chem., 24, 1662-1666 (1959)) dienen, das seinerseits ein wertvolles Ausgangsmaterial für Polyasparaginsäure und ihre Salze darstellt. Letztere finden breite Verwendung als Detergentien, Dispergier- und Formulierhilfsmittel.

Maleinamidsäure findet ferner Verwendung als Ausgangsmaterial für Alkyl-β-cyanoacrylate (J. Org. Chem. 26, 6 (1961), die ihrerseits vielseitige Anwendungen z.B. als Wirkstoffzwischenprodukte finden (US 2 437 231, US 2 531 408, US 2 850 486 und US 2 850 487).

Im Folgenden wird die Erfindung anhand von Ausführungsbeispielen und Zeichnungen näher erläutert.

Es zeigen
- Fig. 1:: Ein Verfahrensschema für die weitgehend adiabatische Herstellung von Polysuccinimid
- Fig. 2:: Ein Verfahrensschema für die Herstellung von Polyasparaginsäure
- Fig. 3:: Ein Verfahrensschema für die Herstellung von Maleinamidsäure

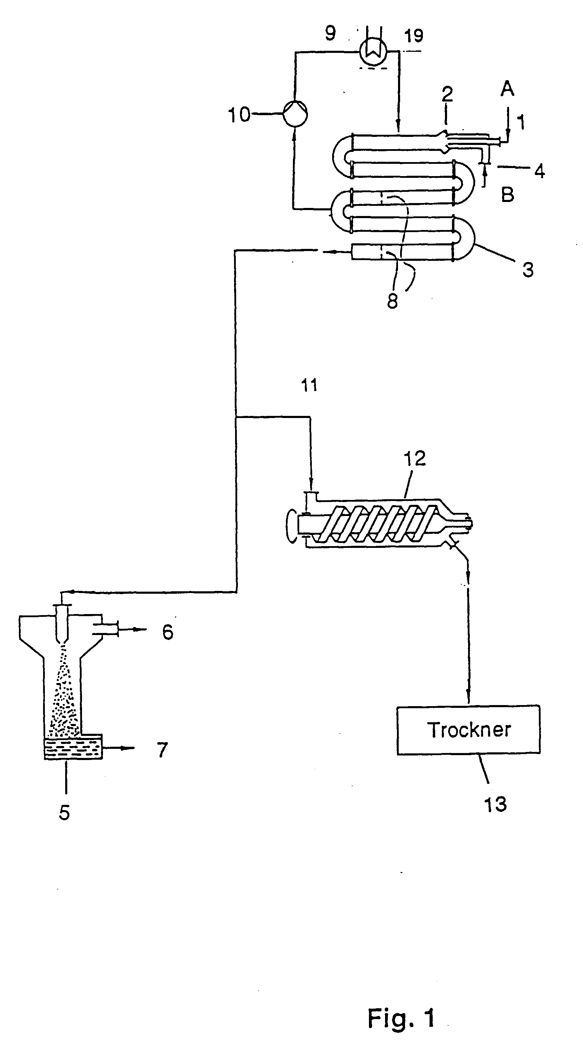

Gemäß Figur 1 wird das aus Maleinsäureanhydrid oder einem Derivat von Maleinsäureanhydrid bestehende Edukt A über die Dosierpumpe 1 einem Strahlmischer 2 mit nachgeschaltetem Rohrreaktor 3 zugeführt. Die Edukte A, B können am Strahlmischer 2 auch vertauscht werden. Gleichzeitig wird mit Hilfe der Dosierpumpe 4 das Edukt B in den Strahlmischer 2 eingedüst. Am Düsenaustritt findet sofort eine intensive Vermischung der Edukte A, B statt. Gleichzeitig wird die exotherme Reaktion zwischen den Edukten A, B gestartet. Diese Reaktion setzt sich dann in dem stromabwärtsfolgenden Rohrreaktor 3 fort, wobei im ersten Reaktionsschritt ein stickstoffhaltiges niedermolekulares Derivat der Maleinsäure entsteht. Die in diesem Reaktionsschritt freigesetzte Reaktionswärme wird nun dazu benutzt, um in einem zweiten unmittelbar darauf folgenden Reaktionsschritt, der ebenfalls im Rohrreaktor 3 stattfindet, das stickstoffhaltige niedermolekulare Derivat zu einem Polymer mit wiederkehrenden Succinyleinheiten zu polymerisieren. Dabei erfolgt die Mischung der Edukte im Strahlmischer 2 und die exotherme Reaktion im ersten Reaktionsschritt so schnell, daß im wesentlichen keine Wärme an die Umgebung abgegeben wird; d.h. die Reaktion zu dem stickstoffhaltigen niedermolekularen Derivat der Maleinsäure erfolgt weitgehend adiabatisch. Das erhaltene Polymer, z.B. Polysuccinimid, kann nach dem Rohrreaktor 3 unmittelbar einem Sprühtrockner 5 zur Trocknung zugeführt werden, an dessen Austrag 7 das fertige rieselfähige Produkt abgezogen wird. Dampf und Gas werden über den Stutzen 6 abgeführt. In dem Rohrreaktor 3 können Blenden 8 oder andere Widerstände zur Festlegung des Reaktionsdrucks eingebaut werden. Über den Druck und gegebenenfalls eine zusätzliche Begleitheizung oder -kühlung kann die Reaktionstemperatur bei vorgegebenen Edukten genau gesteuert werden. Außerdem kann der Rohrreaktor 3 nach Art eines Schlaufenreaktors mit einer Rückführungsleitung 9 ausgestattet werden, die eine Förderpumpe 10 und einen Wärmeaustauscher 19 aufweist. In die Rückführungsleitung 9 kann gegebenenfalls weiteres Lösungmittel (Wasser, organisches Lösungmittel oder überkritisches Gas wie CO₂) zur Erniedrigung der Viskosität der Mischung zudosiert werden. Statt eines Rohrreaktors 3 kann in einer bevorzugten Variante des erfindungsgemäßen Verfahrens ein MPWR eingesetzt werden.

Eine weitere Variante des Verfahrens besteht darin, daß die Reaktionsbedingungen, insbesondere die Temperatur und die Verweilzeit im Rohrreaktor 3 so eingestellt werden, daß das am Rohrreaktor 3 austretende Produkt noch nicht vollständig durchpolymerisiert ist. Die Verweilzeit im Rohrreaktor kann im wesentlichen über die Strömungsgeschwindigkeit (Durchsatz), die Steigung der Rohrwendel beim MPWR und über die Gesamtlänge des Rohrreaktors eingestellt werden, während die Temperatur zweckmäßig über den Reaktordruck und/oder das Kühl-/Heizmedium und/oder die zu verdampfende Lösungsmittel-/Wassermenge festgelegt wird. Gegebenenfalls kann bei unvollständiger Polymerisation das Reaktionsprodukt bei dieser Verfahrensvariante über die Leitung 11 einem Hochviskosreaktor 12 zugeführt und dort vollständig durchpolymerisiert werden. Das aus dem Hochviskosreaktor austretende pastöse oder pulverförmige Produkt wird danach gegebenenfalls in bekannter Weise nachgetrocknet (Trockner 13). Als Hochviskosreaktor wird z.B. eine kontinuierlich betriebene, selbstreinigende und mit Hohlwellen bestückte Gleichdrallschneckenmaschine eingesetzt. Bei dieser Verfahrensvariante werden die Reaktionsbedingungen zweckmäßig so eingestellt, daß das am Rohrreaktor 3 bzw. MPWR austretende Produkt 5 bis 95 %, vorzugsweise zumindest 20 %, besonders bevorzugt größer 50 %, zu einem Prepolymer umgewandelt wird. Im Hochviskosreaktor 12 wird dann die Polymerisation abgeschlossen.

Als Lösungsmittel für das stickstoffhaltige Edukt B kann Wasser oder ein organisches Lösungsmittel oder ein überkritisches Gas wie CO₂ verwendet werden, das aufgrund der Exothermie des ersten Reaktionsschritts im Rohrreaktor 3 bzw. MPWR zum größten Teil verdampft. Die Reaktion kann problemlos so durchgeführt werden, daß im Rohrreaktor 3 bzw. MPWR 50 bis 99 % des Lösungsmittels (Wasser, organisches Lösungsmittel oder überkritisches Gas wie CO₂) verdampfen. Über den Gehalt an Lösungsmittel und den Druck kann die Reaktionstemperatur im Rohrreaktor 3 bzw. MPWR eingestellt werden.

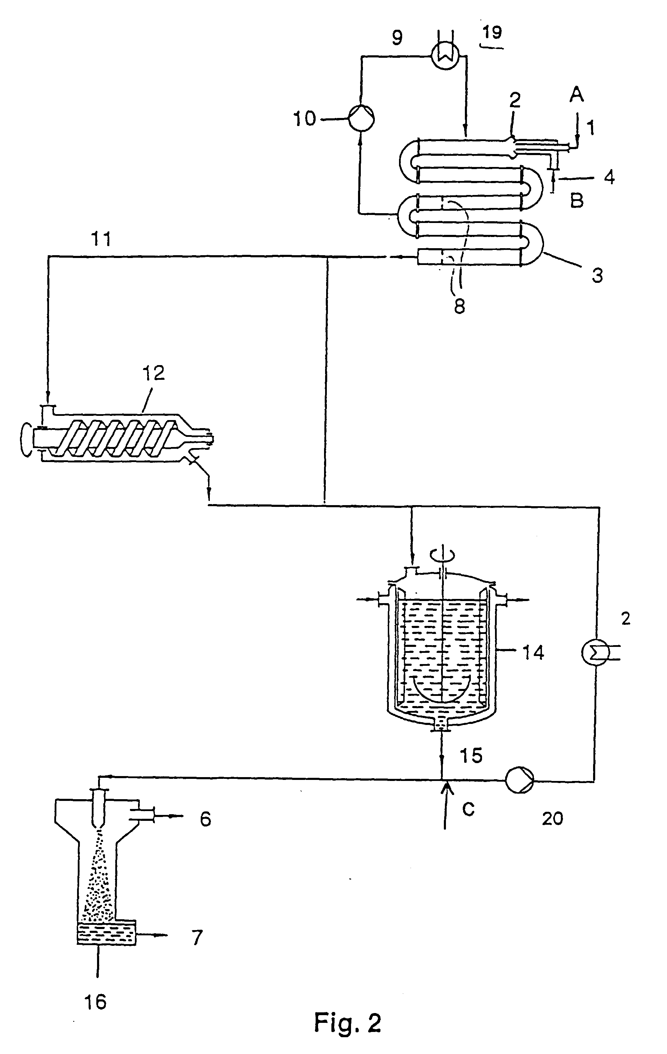

Das nach dem Verfahren gemäß Figur 1 hergestellte Polysuccinimid kann nach dem in Figur 2 dargestelltem Verfahren weiter zu Polyasparaginsäure hydrolysiert werden. Zu diesem Zweck wird das vollständig polymerisierte Produkt aus dem Rohrreaktor 3 bzw. MPWR direkt in eine geeignete Hydrolysevorrichtung 14 geleitet, während bei der Verfahrensvariante mit unvollständiger Polymerisation das aus dem Hochviskosreaktor 12 austretende Produkt in die obengenannte Vorrichtung 14 gefördert wird. Die Hydrolyse erfolgt in der obengenannten Vorrichtung 14 in bekannter Weise durch Zugabe einer Base C bei Temperaturen zwischen 20°C und dem Siedepunkt der Polyasparaginsäure-haltigen Suspension gegebenenfalls unter Druck. Eine bevorzugte Ausführungsform der Hydrolysevorrichtung 14 ist ein Umpumpungsreaktor mit außen-/innenliegenden Wärmetauschern 21 zur guten Temperaturführung und schonenden Hydrolyse der Polymere mit wiederkehrenden Succinyleinheiten. Die Kreislaufführung der basenhaltigen Produktlösung kann zur intensiven Vermischung in das Endstück des Rohrreaktors bzw. MPWR eingespeist werden. Die Einspeisung der Base erfolgt bevorzugt auf der Saugseite der zur intensiven Vermischung geeigneten Kreislaufpumpe 20. Am Ausgang 15 der obengenannten Vorrichtung 14 wird die fertige Polyasparaginsäure abgezogen und gegebenenfalls einem Nachreaktor zugeführt. Anschließend wird in einem nachgeschalteten Sprühtrockner 16 getrocknet.

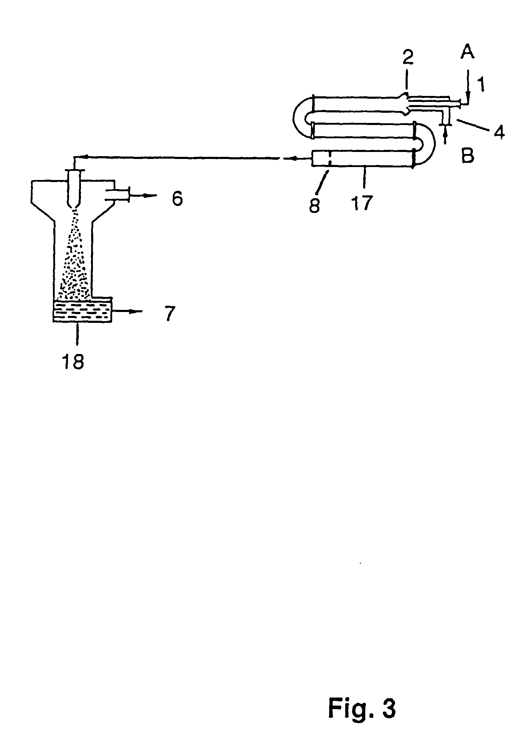

Bei dem Verfahren nach Figur 3 wird eine ähnliche Verfahrensweise dazu benutzt, Maleinamidsäure herzustellen. Dabei werden die Reaktionsbedingungen im Reaktor 17 bewußt so gewählt, daß allenfalls ein geringer Anteil der Edukte A, B polymerisiert. Praktisch geht man dabei so vor, daß der Reaktor 17 kürzer ausgeführt und gekühlt (externe und/oder Verdampfungskühlung) wird, um die Polymerisation zu verhindern. Das Reaktionsprodukt (Maleinamidsäure) wird ähnlich wie bei der zuerst beschriebenen Verfahrensvariante gemäß Figur 1 z.B. in einem Sprühtrockner 18 getrocknet.

Die bei den Verfahren gemäß Figur 1 - 3 eingehaltenen Verfahrensparameter und Reaktionsbedingungen werden im folgenden anhand der Ausführungsbeispiele weiter erläutert.

### Beispiele

Die folgenden Beispiele wurden in einem Reaktorsystem durchgeführt, welches aus einem Strahlmischer 2 der Bauart Glattstrahldüse und einem anschließenden Rohrreaktor 3 bzw. MPWR bestand. Die thermische Polymerisation wurde gegebenenfalls beendet in einer nachgeschalteten, kontinuierlich betriebenen, selbstreinigenden und mit Hohlwellen bestückten Gleichdrallschneckenmaschine 12. In den Beispielen wurde geschmolzenes Maleinsäureanhydrid mittels einer Glattstrahldüse in mit 25 bzw. 50 gew.-%iger Ammoniaklösung eingedüst und schnell in den Rohrreaktor 3 bzw. MPWR hinein vermischt. Rohrreaktoren verschiedener Länge mit einem Rohrinnendurchmesser von 15 mm wurden am Rohrende mit einer Blende 8 bestückt, um über den Druckverlust den Reaktordruck steuern zu können. Konstruktionsbedingt ist der Reaktordruck etwa mit dem Ammoniakdruck bei der Dosierung identisch. Hinter der Blende 8 entspannte sich das Reaktionsgemisch auf Normaldruck und strömte über ein Verweilrohr entweder in die Schneckenmaschine 12 zur thermischen Polymerisation oder direkt in den nachgeschalteten Hydrolysebehälter 14.

### Beispiel 1

Es wurde geschmolzenes MSA mit 80°C über eine Glattstrahldüse mit 0,4 mm Düsenquerschnitt mit 8°C kalter 25 gew.-%iger wäßriger Ammoniaklösung vermischt und in den nachgeschalteten Rohrreaktor dosiert. Nach einer Reaktionsraumlänge von 10 cm wurde zur Druckhaltung eine Blende mit einem Innendurchmesser von 0,75 mm in die Rohrleitung eingeschraubt. Dem Reaktionsraum war ein 1 m langes Verweilzeitrohr nachgeschaltet. Die MSA-Schmelze wurde mit einem Massenstrom von 15,7 kg/h bei 28 bar durch die Glattstrahldüse in den Reaktionsraum gedrückt. Die wäßrige Ammoniaklösung wurde bei 20 bar mit 11,4 kg/h in den Reaktionsraum dosiert. Die Temperatur im Reaktionsraum betrug 110 bis 180°C. Bei der Entspannung hinter der Blende wurde nur noch wenig Wassser verdampft, so daß es nur zu einer geringfügigen Temperaturabsenkung kam. Das durch bereits partielles Verdampfen von Wasser vorkonzentrierte viskose Flüssigkeitsgemisch wurde anschließend bei 170 bis 175°C auf einer beheizbaren, doppelwelligen Gleichdrallschneckenmaschine mit einer Verweilzeitvon 10 Minuten polymerisiert. Dabei wurde ein grobkörniges bis pulvriges rosa- bis orangefarbenes Produkt erhalten.

Die Analysenergebnisse sind in der Tabelle 1 zusammengefaßt.

### Beispiel 2

Wiederum wurde der mit einer Glattstrahldüse als Strahlmischer versehene Rohrreaktor eingesetzt. Es wurde geschmolzenes MSA mit 85°C über eine Glattstrahldüse mit 0,7 mm Düsenquerschnitt mit 6°C kalter 25 gew.-%iger wäßriger Ammoniaklösung vermischt und in den Rohrreaktor dosiert. Nach einer Reaktionsraumlänge von 6 cm wurde zur Druckhaltung die Blende mit einem Innendurchmesser von 0,75 mm in der Rohrleitung belassen. Das dem Reaktionsraum nachgeschaltete Verweilrohr wurde auf 40 cm verkürzt. Die Verweilzeit im Reaktionsraum betrug damit etwa 0,4 s. Mit dem verkürzten Verweilrohr nach dem Reaktionsraum betrug die Gesamtverweilzeit nur noch etwa 1,6 s. Die MSA-Schmelze wurde mit einem Massenstrom von 45,8 kg/h bei 36 bar durch die Glattstrahldüse in den Reaktionsraum gedrückt. Die wäßrige Ammoniaklösung wurde bei 30 bar mit 34,3 kg/h in den Reaktionsraum dosiert. Die Temperatur im Reaktionsraum betrug etwa 185°C. Bei der Entspannung hinter der Blende kam es durch das Verdampfen von Wasser zu einer Temperaturabsenkung auf etwa 135°C. Das auf diese Weise vorkonzentrierte viskose Flüssigkeitsgemisch wurde anschließend wieder bei 170 bis 175°C auf einer beheizbaren, doppelwelligen Gleichdrallschneckenmaschine mit einer Verweilzeit von 10 Minuten polymerisiert. Dabei wurde ebenfalls ein grobkörniges bis pulveriges rosa- bis orangefarbenes Produkt erhalten. Die Analysenergebnisse sind in der Tabelle 1 zusammengefaßt.

### Beispiel 3

Der Versuch wurde in der gleichen Apparatur und unter den gleichen Bedingungen wie Beispiel 1 durchgeführt.

Es wurde geschmolzenes MSA mit 75°C über eine Glattstrahldüse mit 0,4 mm Düsenquerschnitt mit 7°C kalter 25 gew.-%iger wäßriger Ammoniaklösung vermischt und in den Rohrreaktor dosiert. Nach einer Reaktionsraumlänge von 10 cm wurde zur Druckhaltung eine Blende mit einem Innendurchmesser von 0,75 mm in die Rohrleitung eingeschraubt. Als nachgeschaltetes Verweilrohr wurde eine 1 m lange Rohrleitung verwendet. Die MSA-Schmelze wurde mit einem Massenstrom von 12,8 kg/h bei 25 bar durch die Glattstrahldüse in den Reaktionsraum gedrückt. Die wäßrige Ammoniaklösung wurde bei 20 bar mit 17,7 kg/h in den Reaktionsraum dosiert. Die Temperatur im Reaktionsraum und nach der Entspannung betrug ebenfalls 110 bis 180°C. Das durch bereits partielles Verdampfen von Wasser vorkonzentrierte viskose Flüssigkeitsgemisch wurde anschließend direkt bei 170 bis 175°C auf der beheizbaren, doppelwelligen Gleichdrallschneckenmaschine mit einer Verweilzeit von 10 Minuten polymerisiert. Dabei wurde ein grobkörniger oranger Feststoff erhalten.

Die Analysenergebnisse sind in der Tabelle 1 zusammengefaßt.

### Analytik:

**Tabelle 1:**

| | Beispiele | | | | | | |
|---|---|---|---|---|---|---|---|
| | 1 | 2 | 3 | 4 | 5 | 6 | 7 |
| Verhältnis MSA:NH₃ | 1:1 | 1:1 | 1:2 | 1:1 | 1:1 | 1:1 | 1:1¹⁾ |
| Reaktionsdüse/ Produktausbeute [kg/h] | 26,5 | 77,5 | 28,5 | 55,0 | 56 | - | - |

| Produktzusammensetzung | | | | | | | |
|---|---|---|---|---|---|---|---|
| C | 28,9 | 29,0 | 22,3 | 39,0 | 38, 3 | - | - |
| N | 10,7 | 10,9 | 15,1 | 10,9 | 10, 6 | - | - |
| NH₄ | 7,6 | 8,3 | 11,5 | 2,9 | 1,4 | - | - |
| H₂O | 22,7 | 21,0 | 38,0 | 15,5 | 16, 5 | - | - |

| Polymerisation | | | | | | | |
|---|---|---|---|---|---|---|---|
| Produktzusammensetzung | PSI | PSI | PSI | PSI | | PAS²⁾ | PAS²⁾ |
| C | 47,2 | 47,5 | 42,8 | 47,5 | - | 30,2 | 32,4 |
| H | 3,8 | 3,9 | 4,5 | 9,8 | - | 3,6 | 4,2 |
| N | 14,0 | 13,8 | 22,2 | 14,1 | - | 7,9 | 9,6 |
| NH₄ | 1,3 | 1,0 | 0,9 | 1,1 | - | <0,1 | 0,4 |
| H2O | 0,4 | 0,5 | 0,6 | 0,5 | - | 8,9 | 5,9 |

| Molmassenverteilung nach GPC³⁾ | | | | | | | |
|---|---|---|---|---|---|---|---|
| M_{w} | 2950 | 3025 | - | 3075 - | | 3000 | 2950 |
| Säurezahl [mg NaOH/g PSI] | 412 | 404 | - | 410 | - | - | - |

| | | | | | | | |
|---|---|---|---|---|---|---|---|
| 1) Harnstoff | | | | | | | |
| 2) Polyasparaginsäure-Na-Salz | | | | | | | |
| 3) Die Molmassenverteilung wurde nach Überführung in das Natriumsalz mit Hilfe der Gelpermationschromatographie (GPC) durch Messungen gegen Eichstandard bestimmt. Als Eichstandard wurden Polyasparaginsäurenatriumsalze bekannter Molmasse der Firma Sigma verwendet. Im Beispiel 3 wurde wegen des Fehlens eines Eichstandards auf die Angabe einer Molmassenverteilung verzichtet. | | | | | | | |

Die Struktur der in den Beispielen 1 - 3 hergestellten Polymerisationsprodukte wurde mittels ¹³C-NMR und FT-IR untersucht. Hierbei wurde gefunden, daß die in Beispiel 1 und 2 hergestellten Produkte hauptsächlich aus Polysuccinimid bestehen. Als Nebenkomponente wurde zu geringen Anteilen Polyasparaginsäure gefunden. In Beispiel 3 bestand das Produkt überwiegend aus Polyasparagin und enthielt nur kleinere Anteile von Polysuccinimid. Durch eine alkalische Hydrolyse kann allerdings daraus Polyasparaginsäure-Na-Salz hergestellt werden. Eine GPC-Analyse des Hydrolyseprodukts ergab ein mittleres Molekulargewicht von 2900.

### Beispiel 4

Wiederum wurde der mit einer Glattstrahldüse als Strahlmischer versehene Rohrreaktor verwendet. Es wurde geschmolzenes MSA mit 82°C über eine Glattstrahldüse mit 0,7 mm Düsenquerschnitt mit 9°C kalter 50 Gew.%iger wäßriger Ammoniaklösung vermischt und in den Rohrreaktor dosiert. Nach einer Reaktionsraumlänge von 15 cm wurde zur Druckhaltung eine Blende mit einem Innendurchmesser von 0,9 mm in der Rohrleitung eingesetzt. Das nachgeschaltete Verweilrohr war 40 cm lang. Die MSA-Schmelze wurde mit einem Massenstrom von 44,4 kg/h bei 72 bar durch die Glattstrahldüse in den Reaktionsraum gedrückt. Die wäßrige Ammoniaklösung wurde bei 65 bar mit 14,8 kg/h in den Reaktionsraum dosiert. Die Temperatur im Reaktionsraum betrug 250 bis 275°C. Bei der Entspannung hinter der Blende kam es durch das Verdampfen von Wasser zu einer Temperaturabsenkung auf etwa 230°C. Die auf diese Weise erhaltene viskose Flüssigkeit war eine bei 140°C viskose, gelb-orange wäßrige Schmelzlösung, die beim Abkühlen auf Raumtemperatur plastisch erstarrte. Eine Analyse dieser Schmelzlösung zeigte, daß bereits eine deutliche Polymerisation stattgefunden hatte. So wurde nach GPC-Messung ein mittleres Molekulargewicht Mw von 1150 gefunden.

Die Schmelzlösung wurde anschließend wieder zur Nachpolymerisation bei 170 bis 175°C auf einer beheizbaren, doppelwelligen Gleichdrallschneckenmaschine mit einer Verweilzeit von 10 Minuten polymerisiert. Dabei wurde ebenfalls ein pulvriges, rosa-bis orangefarbenes Produkt erhalten.

Die Analysenergebnisse sind in der Tabelle 1 zusammengefaßt.

### Beispiel 5

Wiederum wurde der mit einer Glattstrahldüse als Strahlmischer versehene Rohrreaktor verwendet. Es wurde geschmolzenes MSA mit 70°C über eine Glattstrahldüse mit 0,7 mm Düsenquerschnitt mit 5°C kalter 50 gew.-%iger wäßriger Ammoniaklösung vermischt und in den Rohrreaktor dosiert. Nach einer Reaktionsraumlänge von 50 cm wurde zur Druckhaltung nun eine Blende mit einem Innendurchmesser von 1,1 mm in die Rohrleitung eingesetzt. Das Verweilrohr nach dem Reaktionsraum hatte wiederum eine Länge von 40 cm. Die MSA-Schmelze wurde mit einem Massenstrom von 50,2 kg/h bei 68 bar durch die Glattstrahldüse in den Reaktionsraum gedrückt. Die wäßrige Ammoniaklîsung wurde bei 58 bar mit 15,7 kg/h in den Reaktionsraum dosiert. Die Temperatur im Reaktionsraum betrug 320 bis 340°C. Bei der Entspannung hinter der Blende kam es durch das Verdampfen von Wasser zu einer Temperaturabsenkung auf etwa 260°C.

Das heiße Gemisch wurde in einen gekühlten Vorlagekessel mit 50 1 Inhalt geleitet. Man erhielt eine orange-rote Schmelzlösung, die nach GPC-Messung ein mittleres Molekulargewicht Mw von 1700 besitzt. Durch Zugabe von Wasser kann aus dieser Schmelzlösung ein hellroter Feststoff ausgefüllt und abgetrennt werden, der aus PSI besteht. Das mittlere Molekulargewicht betrug 2700. Das aus der Schmelzlösung durch alkalische Hydrolyse erhältliche Polynatriumsalz zeigt bereits gute Sequestrier- und Dispergiereigenschaften, so daß für zumindest einige Anwendungen auf eine Nachpolymerisation in einem Hochviskosreaktor verzichtet werden kann. Die Analysenergebnisse sind in der Tabelle 1 zusammengefaßt.

### Beispiel 6

In diesem Beispiel wurde ein mit einer Glattstrahldüse als Strahlmischer versehener MPWR ohne nachgeschalteten Hochviskosreaktor verwendet. Es wurde geschmolzenes MSA mit 100°C über eine Glattstrahldüse mit 0,35 mm Düsenquerschnitt mit 7°C kalter 40 Gew.%iger wäßriger Ammoniaklösung vermischt und in den MPWR dosiert. Nach einer Reaktionsraumlänge von 290 cm wurde zur Druckhaltung nun eine Blende mit einem Innendurchmesser von 2,1 mm in das Rohr des MPWR eingesetzt. Ein Verweilrohr mit einer Länge von 40 cm führt vom MPWR zu einem nachgeschalteten 50 l - Rührkessel, in dem 20 kg Wasser vorgelegt werden. Die MSA-Schmelze wurde mit einem Massenstrom von 25,4 kg/h bei 40 bar durch die Glattstrahldüse in den Reaktionsraum gedrückt. Die wäßrige Ammoniaklösung wurde bei 16,5 bar mit 11,0 kg/h in den Reaktionsraum dosiert. Die Temperatur im Reaktionsraum betrug 220 bis 235°C. Bei der Entspannung hinter der Blende kam es durch das Verdampfen von Wasser lediglich zu einer Temperaturabsenkung auf etwa 210°C. Das heiße Gemisch wurde in den auf 60°C temperierten Vorlagekessel geleitet und es wurde 45 Gew.%ige Natronlauge zudosiert, wobei der pH-Wert durch Regelung bei etwa 9,5 gehalten wurde. Man erhält eine orange-rote wäßrige PAS-Lösung. Der isolierte Feststoff, Polyasparaginsäure Natriumsalz, hat nach GPC-Messung ein mittleres Molekulargewicht Mw von 3000. Das Produkt zeigt gute Sequestrier- und Dispergiereigenschaften.

### Beispiel 7

Wiederum wurde der mit einer Glattstrahldüse als Strahlmischer versehene Rohrreaktor ohne nachgeschalteten Hochviskosreaktor verwendet. Es wurde geschmolzenes MSA mit 130°C über eine Glattstrahldüse mit 0,35 mm Düsenquerschnitt mit einer 90°C heißen 75 gew.-%igen wäßrigen Harnstofflösung vermischt und in den Rohrreaktor dosiert. Nach einer Reaktionsraumlänge von 290 cm wurde zur Druckhaltung nun eine Blende mit einem Innendurchmesser von 2,1 mm in die Rohrleitung eingesetzt. Ein Verweilrohr mit einer Länge von 40 cm führt zu einem nachgeschalteten 50 l - Rührkessel, in dem 20 kg Wasser vorgelegt werden. Die MSA-Schmelze wurde mit einem Massenstrom von 25,4 kg/h (259 mol/h) bei 40 bar durch die Glattstrahldüse in den Reaktionsraum gedrückt. Die wäßrige Harnstofflösung wurde bei 26,5 bar mit 20,70 kg/h (259 mol/h in den Reaktionsraum dosiert. Die Temperatur im Reaktionsraum betrug 210 bis 225°C. Bei der Entspannung hinter der Blende kam es durch das Verdampfen von Wasser zu einer Temperaturabsenkung auf etwa 200°C. Gleichzeitig wurde überschüssiges Ammoniak und während der Reaktion gebildetes Kohlendioxid entfernt. Das heiße Gemisch wurde in den auf 60°C temperierten Vorlagekessel geleitet und es wurde 45 gew.-%ige Natronlauge zudosiert, wobei der pH-Wert durch Regelung bei etwa 9,5 gehalten wurde. Man erhält eine orange-rote wäßrige PAS-Lösung. Der isolierte Feststoff, Polyasparaginsäure-Natriumsalz, hat nach GPC-Messung ein mittleres Molekulargewicht Mw von 2950. Das Produkt zeigt gute Sequestrier- und Dispergiereigenschaften. Die Analysenergebnisse sind in der Tabelle 1 zusammengefaßt.

### Beispiel 8

4,66 kg (64,8 mol) (25 mol-% bezogen auf MSA) Acrylsäure werden unter Zusatz eines Inhibitors (z. B. Hydrochinon, 2,5-Ditertiär-butylphenol, Methylphenol, N-Phenyl-β-naphtylamin, etc.) in 13,8 kg 40 %iger wässr. Ammoniaklösung als Ammoniumsalz gelöst. Dieses Gemisch wird anstelle der reinen Ammoniaklösung in der Reaktion eingesetzt. Wiederum wurde der mit einer Glattstrahldüse als Strahlmischer versehene Rohrreaktor ohne nachgeschalteten Hochviskosreaktor verwendet. Es wurde geschmolzenes MSA mit 100°C über eine Glattstrahldüse mit 0,35 mm Düsenquerschnitt mit der 15°C kalten Acrylsäure-haltigen Gemischlösung vermischt und in den Rohrreaktor dosiert. Nach einer Reaktionsraumlänge von 290 cm wurde zur Druckhaltung nun eine Blende mit einem Innendurchmesser von 2,1 mm in die Rohrleitung eingesetzt. Ein Verweilrohr mit einer Länge von 40 cm führt zu einem nachgeschalteten 50 l -Rührkessel, in dem 20 kg Wasser vorgelegt werden. Die MSA-Schmelze wurde mit einem Massenstrom von 25,4 kg/h bei 40 bar durch die Glattstrahldüse in den Reaktionsraum gedrückt. Die wäßrige Gemischlösung wurde bei 18,5 bar mit 18,6 kg/h in den Reaktionsraum dosiert. Die Temperatur im Reaktionsraum betrug 220 bis 235°C. Bei der Entspannung hinter der Blende kam es durch das Verdampfen von Wasser zu einer Temperaturabsenkung auf etwa 200°C. Das heiße Gemisch wurde auf eine Paddelschnecke gegeben, wo unter Ausdampfen des restlichen Wassers eine Verfestigung des Produktes stattfand. Man erhält einen orange-roten Feststoff. Durch mehrfaches Waschen mit Wasser wurde er von nicht umgesetzten Edukten befreit. Im isolierten Polymer wurden nach Totalhydrolyse neben Asparaginsäureeinheiten noch β-Alanineinheiten gefunden. Das Copolymer hat nach GPC-Messung ein mittleres Molekulargewicht Mw von 2200.

### Beispiel 9

3,8 kg (25,8 mol) (10 mol-% bezogen auf MSA) Glutaminsäure werden in 12,1 kg 40 %iger wässr. Ammoniaklösung als Ammoniumsalz gelöst. Dieses Gemisch wird anstelle der reinen Ammoniaklösung in der Reaktion eingesetzt. Wiederum wurde der mit einer Glattstrahldüse als Strahlmischer versehene Rohrreaktor ohne nachgeschalteten Hochviskosreaktor verwendet. Es wurde geschmolzenes MSA mit 100°C über eine Glattstrahldüse mit 0,35 mm Düsenquerschnitt mit der 15°C kalten Glutaminsäure-haltigen Gemischlösung vermischt und in den Rohrreaktor dosiert. Nach einer Reaktionsraumlänge von 290 cm wurde zur Druckhaltung nun eine Blende mit einem Innendurchmesser von 2,1 mm in die Rohrleitung eingesetzt. Ein Verweilrohr mit einer Länge von 40 cm führt zu einem nachgeschalteten 50 l-Rührkessel, in dem 20 kg Wasser vorgelegt werden. Die MSA-Schmelze wurde mit einem Massenstrom von 25,4 kg/h bei 40 bar durch die Glattstrahldüse in den Reaktionsraum gedrückt. Die wäßrige Gemischlösung wurde bei 18,6 bar mit 15,9 kg/h in den Reaktionsraum dosiert. Die Temperatur im Reaktionsraum betrug 220 bis 230°C. Bei der Entspannung hinter der Blende kam es durch das Verdampfen von Wasser zu einer Temperaturabsenkung auf etwa 200°C. Das heiße Gemisch wurde auf eine Paddelschnecke gegeben, wo unter Ausdampfen des restlichen Wassers eine Verfestigung des Produktes stattfand. Man erhält einen orange-roten Feststoff. Durch mehrfaches Waschen mit Wasser und 1N-Salzsäure wurde er von nicht umgesetzten Edukten befreit. Im isolierten Polymer wurden nach Totalhydrolyse neben Asparaginsäureeinheiten noch Glutaminsäureeinheiten gefunden. Das Copolymer hat nach GPC-Messung ein mittleres Molekulargewicht Mw von 2600.

### Ausführungbeispiele für die Herstellung von Maleinamidsäure

### Beispiel 10

Es wurde auch in diesem Fall ein Reaktorsystem bestehend aus einem Strahlmischer und einem Rohrreaktor verwendet. Es wurde geschmolzenes MSA mit 80°C über eine Glattstrahldüse mit 0,4 mm Düsenquerschnitt mit 8°C kalter 25 Gew.%iger wäßriger Ammoniaklösung vermischt und in den nachgeschalteten Rohrreaktor dosiert. Nach einer Reaktionsraumlänge von 10 cm wurde zur Druckhaltung eine Blende mit einem Innendurchmesser von 0,75 mm in die Rohrleitung eingeschraubt. Dem Reaktionsraum folgte ein Verweilrohr von 1 m Länge, bevor das Produktgemisch in einem Vorlagebehälter aufgefangen wurde. Die MSA-Schmelze wurde mit einem Massenstrom von 15,7 kg/h bei 28 bar durch die Glattstrahldüse in den Reaktionsraum gedrückt. Die wäßrige Ammoniaklösung wurde bei 20 bar mit 11,4 kg/h in den Reaktionsraum dosiert. Die Temperatur im Reaktionsraum betrug 110 bis 180°C. Bei der Entspannung hinter der Blende kam es nur wenig zum weiteren Verdampfen von Wasser und somit zu einer geringen Temperaturabsenkung. Als Produkt wurde Maleinamidsäure in Form von weißen Kristallen isoliert. Der Schmelzpunkt liegt bei 170 bis 172°C, die Reinheit bei 98 %. Die Ausbeute lag nach einer zehnminütigen Versuchszeit bei 2,98 kg, d.h. 98,8 % d.Th., Maleinamidsäure.

### Beispiel 11

Wiederum wurde das mit einem Strahlmischer und einem anschließenden Rohrreaktor versehene Reaktorsystem eingesetzt. Es wurde geschmolzenes MSA mit 85°C über eine Glattstrahldüse mit 0,7 mm Düsenquerschnitt mit 6°C kalter 25 gew.-%iger wäßriger Ammoniaklösung vermischt und in den nachgeschalteten Rohrreaktor dosiert. Nach einer Reaktionsraumlänge von 6 cm wurde zur Druckhaltung die Blende mit einem Innendurchmesser von 0,75 mm in der Rohrleitung belassen. Das dem Reaktionsraum nachgeschaltete Verweilrohr wurde auf 0,4 m verkürzt. Die MSA-Schmelze wurde mit einem Massenstrom von 45,8 kg/h bei 36 bar durch die Glattstrahldüse in den Reaktionsraum gedrückt. Die wäßrige Ammoniaklösung wurde bei 30 bar mit 34,3 kg/h in den Reaktionsraum dosiert. Die Temperatur im Reaktionsraum betrug etwa 185°C. Bei der Entspannung hinter der Blende kam es durch das Verdampfen von Wasser zu einer Temperaturabsenkung auf etwa 135°C. Man erhält Maleinamidsäure in 97 %iger Ausbeute und Reinheit. Der Schmelzpunkt liegt bei 169 bis 172°C.

## Patentansprüche

1. Verfahren zur kontinuierlichen Herstellung von Polymeren mit wiederkehrenden Succinyl-Einheiten, bei dem Maleinsäureanhydrid oder ein Derivat davon (Edukt A) mit Ammoniak, einer Ammoniak liefernden Verbindung oder Amiden der Kohlensäure (Edukt B) miteinander vermischt und in einem ersten exothermen Reaktionsschritt zu einem N-haltigen niedermolekularen Derivat der Maleinsäure umgesetzt werden, und dieses Derivat in einem nachgeschalteten zweiten Reaktionsschritt polymerisiert wird, dadurch gekennzeichnet, daß die Reaktion der Edukte (A, B) im ersten Reaktionsschritt adiabatisch erfolgt und die dabei freigesetzte Reaktionswärme eingesetzt wird, um das Reaktionsgemisch auf Polymerisationstemperatur zu bringen und im zweiten Reaktionsschritt das N-haltige niedermolekulare Derivat unter Erhalt eines Polymeren mit wiederkehrenden Succinyl-Einheiten zu polymerisieren.

2. Verfahren nach Anspruch 1, dadurch gekennzeichnet, daß als Edukt A Maleinsäureanhydrid und Derivate des Maleinsäureanhydrids, Maleinsäure oder Fumarsäure oder Mischungen derselben eingesetzt werden.

3. Verfahren nach Anspruch 1 bis 2, dadurch gekennzeichnet, daß als Edukt B neben Ammoniak selbst Ammoniak-liefernde Verbindungen Ammoniumhydrogencarbonat oder Diammoniumcarbonat oder Ammoniumsalze und Amide der Kohlensäure, wie Harnstoff, Isoharnstoff (Ammoniumcyanat), Carbamidsäure, Ammoniumcarbamid oder Mischungen dieser eingesetzt werden.

4. Verfahren nach Anspruch 1 bis 3, dadurch gekennzeichnet, daß Maleinsäureanhydrid oder ihre Derivate sowie Mischungen davon als Schmelze oder in Lösung mit dem stickstoffhaltigen Edukt B vermischt werden.

5. Verfahren nach Anspruch 3 und 4, dadurch gekennzeichnet, daß das stickstoffhaltige Edukt B in reiner Form oder in einem organischen Lösungsmittel und/oder in Wasser gelöst dem Edukt A zugesetzt wird.

6. Verfahren nach Anspruch 4 und 5, dadurch gekennzeichnet, daß als Lösungsmittel polaraprotische Solventien wie Dimethylformamid, N-Alkylpyrrolidone, Sulfolan oder überkritische Gase wie CO₂ verwendet werden.

7. Verfahren nach Anspruch 1 bis 6, dadurch gekennzeichnet, daß das molare Verhältnis von Stickstoff im Edukt B relativ zum Maleinsäureanhydrid oder einem Derivat davon im Edukt A auf einen Wert zwischen 0,1 und 5,0, eingestellt wird.

8. Verfahren nach Anspruch 1 bis 6, dadurch gekennzeichnet, daß die Exothermie des ersten und zweiten Reaktionsschrittes dazu genutzt wird, das organische Lösungsmittel und/oder das Wasser bzw. entstehendens Reaktionswasser zu verdampfen.

9. Verfahren nach Anspruch 1 bis 8, dadurch gekennzeichnet, daß die Edukte (A, B) einem schnell vermischenden Apparat mit einer Mischzeit < 2 s zugeführt werden und danach im 1. Reaktionsschritt die exotherme Reaktion der Edukte (A, B) in weniger als 60 s erfolgt.

10. Verfahren nach Anspruch 9, dadurch gekennzeichnet, daß die Edukte (A, B) einem Strahlmischer zugeführt werden, dem ein Rohrreaktor nachgeschaltet ist.

11. Verfahren nach Anspruch 9, dadurch gekennzeichnet, daß die Edukte (A, B) einem Strahlmischer zugeführt werden, dem ein Mehrphasen-Wendelrohr-Reaktor nachgeschaltet ist.

12. Verfahren nach Anspruch 1 bis 9, dadurch gekennzeichnet, daß die Edukte (A, B) im ersten Reaktionsschritt bei Temperaturen von 0°C und 200°C gemischt werden und die exotherme Reaktion des ersten Reaktionsschrittes genügend Wärme liefert, so daß der zweite Reaktionsschritt bei Temperaturen von 120 °C bis 500 °C durchgeführt wird.

13. Verfahren nach Anspruch 10 bis 12, dadurch gekennzeichnet, daß die Reaktionstemperatur über den Druck im Reaktor und die Mengenströme der zugeführten Edukte A, B, sowie den Gehalt an organischem Lösungsmittel oder Wasser und/oder einen Heiz-/Kühlkreislauf eingestellt wird.

14. Verfahren nach Anspruch 11, dadurch gekennzeichnet, daß die Gesamtverweilzeit der Edukte (A, B) und des Reaktionsgemisches im ersten und zweiten Reaktionsschritt bei Temperaturen zwischen 120°C und 200°C kleiner als 30 min, bei Temperaturen zwischen 200°C und 250°C kleiner als 10 min, bei Temperaturen zwischen 250°C und 300°C kleiner als 5 min, und bei Temperaturen oberhalb von 300°C kleiner als 1 min ist.

15. Verfahren nach Anspruch 1 bis 7, dadurch gekennzeichnet, daß die wiederkehrenden Succinyleinheiten ggf. eine der folgenden Strukturen aufweisen: 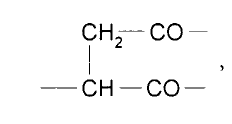 bevorzugt

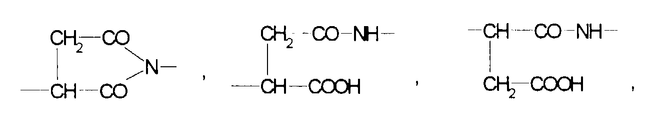

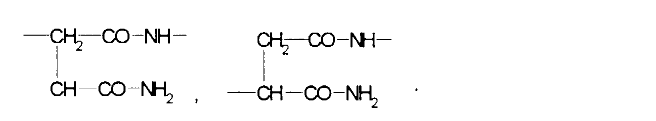

16. Verfahren nach Anspruch 1 bis 14, dadurch gekennzeichnet, daß die Edukte A und B , bevorzugt Maleinsäureanhydrid und Ammoniak, bei einem molaren Überschuß von Ammoniak zu einem Succinyleinheiten-enthaltenden Polymer mit gegebenenfalls. wiederkehrenden Einheiten folgender Struktur umgesetzt werden: 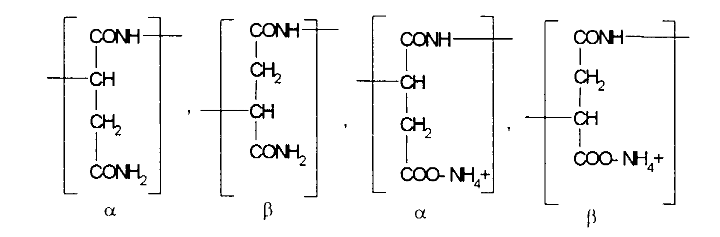 und/oder

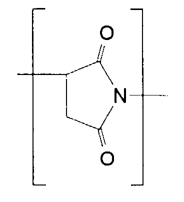

17. Verfahren nach Anspruch 16, dadurch gekennzeichnet, daß pro Mol Edukt A 1,8 bis 25 Mol Edukt B, eingesetzt werden.

18. Verfahren nach Anspruch 1 bis 15, dadurch gekennzeichnet, daß zusätzlich zu den Edukten (A, B) weitere Monomere, wie Alkohole, Dicarbonsäuren, Polycarbonsäuren, ungesättigte Monocarbonsäuren, ungesättigte Dicarbonsäuren, ungesättigte Polycarbonsäuren, Aminocarbonsäuren, Polyaminocarbonsäuren, Fettsäuren, Zucker oder Amine, kontinuierlich zudosiert werden.

19. Verfahren nach Anspruch 16, dadurch gekennzeichnet, daß die Co-Monomere im Polymer mit einem Anteil von 0,1 bis 99,9 mol-% enthalten sind.

20. Verfahren nach Anspruch 1 bis 19, dadurch gekennzeichnet, daß das resultierende Polymer zur entsprechenden Säureform hydrolysiert wird.

21. Verfahren nach Anspruch 20, dadurch gekennzeichnet, daß die Hydrolyse durch Zugabe einer Base durchgeführt wird.

22. Verfahren nach Anspruch 20, dadurch gekennzeichnet, daß die Hydrolyse bei Temperaturen zwischen 20 °C und dem Siedepunkt der Polyasparaginsäure-haltigen Suspension und bei einem pH-Wert von 5 bis 14 durchgeführt wird.

23. Verfahren nach Anspruch 1 bis 21, dadurch gekennzeichnet, daß eines der Edukte (A, B) entlang des Reaktors an verschiedenen Dosierstellen zudosiert wird.

24. Verfahren nach Anspruch 1 bis 21, dadurch gekennzeichnet, daß teilweise umgesetztes Reaktionsgemisch aus dem Reaktor abgezogen wird und in einer Kreislaufführung in die erste Reaktionszone zurückgeführt wird.

## Claims

1. Process for the continuous preparation of polymers containing repeating succinyl units, in which maleic anhydride or a derivative thereof (starting material A) is mixed together with ammonia, an ammonia-releasing compound or amides of carbonic acid (starting material B), and, in a first exothermic reaction step, are reacted to give an N-containing low molecular weight derivative of maleic acid, and this derivative is polymerized in a downstream second reaction step, characterized in that the reaction of the starting materials (A, B) in the first reaction step takes place adiabatically and the heat of the reaction which is liberated is used to bring the reaction mixture to polymerization temperature and, in the second reaction step, to polymerize the N-containing low molecular weight derivative with retention of a polymer containing repeating succinyl units.

2. Process according to Claim 1, characterized in that the starting material A used is maleic anhydride and derivatives of maleic anhydride, maleic acid or fumaric acid or mixtures thereof.

3. Process according to Claim 1 or 2, characterized in that the starting material B used is, in addition to ammonia itself, the ammonia-releasing compounds ammonium hydrogencarbonate or diammonium carbonate or ammonium salts and amides of carbonic acid, such as urea, isourea (ammonium cyanate), carbamic acid, ammonium carbamide or mixtures thereof.

4. Process according to Claims 1 to 3, characterized in that maleic anhydride or its derivatives and mixtures thereof are mixed as the melt or in solution with the nitrogen-containing starting material B.

5. Process according to Claims 3 and 4, characterized in that the nitrogen-containing starting material B is added to the starting material A in pure form or dissolved in an organic solvent and/or in water.

6. Process according to Claims 4 and 5, characterized in that the solvents used are polaraprotic solvents such as dimethylformamide, N-alkylpyrrolidones, sulpholane or supercritical gases such as CO₂.

7. Process according to Claims 1 to 6, characterized in that the molar ratio of nitrogen in the starting material B relative to maleic anhydride or a derivative thereof in the starting material A is set at a value between 0.1 and 5.0.

8. Process according to Claims 1 to 6, characterized in that the heat liberated from the first and second reaction steps is used to evaporate the organic solvent and/or the water or the water of reaction which forms.

9. Process according to Claims 1 to 8, characterized in that the starting materials (A, B) are fed to a high-speed mixing apparatus with a mixing time of <2 s, and then the 1st reaction step of the exothermic reaction of the starting materials (A, B) takes place in less than 60 s.

10. Process according to Claim 9, characterized in that the starting materials (A, B) are fed to a jet mixer to which a downstream tubular reactor is connected.

11. Process according to Claim 9, characterized in that the starting materials (A, B) are fed to a jet mixer to which a downstream multiphase helical tube reactor is connected.

12. Process according to Claims 1 to 9, characterized in that the starting materials (A, B) are mixed in the first reaction step at temperatures of 0°C and 200°C, and the exothermic reaction in the first reaction step produces sufficient heat for the second reaction step to be carried out at temperatures of 120°C to 500°C.

13. Process according to Claims 10 to 12, characterized in that the reaction temperature is adjusted by the pressure in the reactor and the flow rates of the starting materials A, B fed in, and the content of organic solvent or water and/or a heating/cooling circuit.

14. Process according to Claim 11, characterized in that the total residence time of the starting materials (A, B) and of the reaction mixture in the first and second reaction steps is less than 30 min at temperatures between 120°C and 200°C, less than 10 min at temperatures between 200°C and 250°C, less than 5 min at temperatures between 250°C and 300°C, and less than 1 min at temperatures above 300°C.

15. Process according to Claims 1 to 7, characterized in that the repeating succinyl units optionally have one of the following structures: 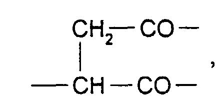 preferably

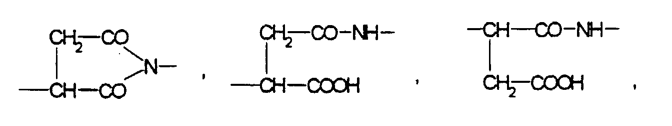

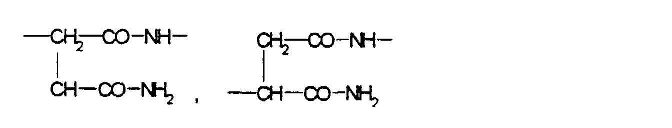

16. Process according to Claims 1 to 14, characterized in that the starting materials A and B, preferably maleic anhydride and ammonia, are reacted, for a molar excess of ammonia, to give a polymer containing succinyl units and optionally repeating units of the following structure: 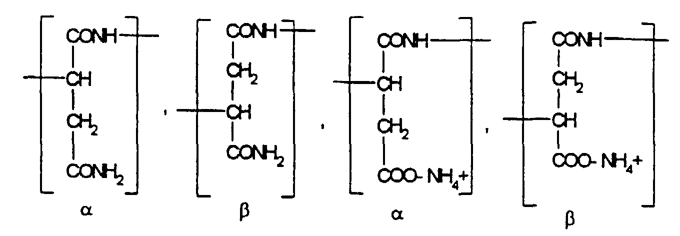 and/or

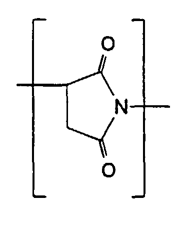

17. Process according to Claim 16, characterized in that per mol of starting material A, 1.8 to 25 mol of starting material B are used.

18. Process according to Claims 1 to 15, characterized in that, in addition to the starting materials (A, B), other monomers, such as alcohols, dicarboxylic acids, polycarboxylic acids, unsaturated monocarboxylic acids, unsaturated dicarboxylic acids, unsaturated polycarboxylic acids, aminocarboxylic acids, polyaminocarboxylic acids, fatty acids, sugars or amines are continuously metered in.

19. Process according to Claim 16, characterized in that the comonomers in the polymer are present in an amount of from 0.1 to 99.9 mol%.

20. Process according to Claims 1 to 19, characterized in that the resulting polymer is hydrolyzed to give the corresponding acid form.

21. Process according to Claim 20, characterized in that the hydrolysis is carried out by adding a base.

22. Process according to Claim 20, characterized in that the hydrolysis is carried out at temperatures between 20°C and the boiling point of the polyaspartic-acid-containing suspension and at a pH of from 5 to 14.

23. Process according to Claims 1 to 21, characterized in that one of the starting materials (A, B) is metered in at various metering points along the reactor.

24. Process according to Claims 1 to 21, characterized in that partially reacted reaction mixture is removed from the reactor and returned to the first reaction zone in a circuit.

## Revendications

1. Procédé pour la préparation continue de polymères à motifs succinyle répétés, dans lequel on mélange l'anhydride maléique ou un dérivé de l'anhydride maléique (composant de départ A) avec de l'ammoniac, un composé apportant de l'ammoniac ou des amides de l'acide carbonique (composant de départ B) et on fait réagir ces composants dans un premier stade de réaction exothermique avec formation d'un dérivé azoté à bas poids moléculaire de l'acide maléique qu'on polymérise dans un deuxième stade successif de réaction, caractérisé en ce que la réaction des composants de départ (A, B) au premier stade est réalisée dans des conditions adiabatiques et en ce que la chaleur de réaction libérée à ce stade est exploitée pour porter le mélange de réaction à la température de polymérisation et polymériser au deuxième stade le dérivé azoté à bas poids moléculaire, ce qui donne un polymère à motifs succinyle répétés.

2. Procédé selon la revendication 1, caractérisé en ce que l'on utilise en tant que composant de départ A l'anhydride maléique ou l'un de ses dérivés, l'acide maléique ou l'acide fumarique ou un mélange de ces composés.

3. Procédé selon les revendications 1 à 2, caractérisé en ce que l'on utilise en tant que composant de départ B, outre l'ammoniac lui-même, en tant que composé apportant de l'ammoniac, du bicarbonate d'ammonium ou du carbonate diammonique ou un sel d'ammonium ou amide de l'acide carbonique tel que l'urée, l'iso-urée (cyanate d'ammonium), l'acide carbamique, le carbamate d'ammonium ou un mélange de ces composés.

4. Procédé selon les revendications 1 à 3, caractérisé en ce que l'on mélange l'anhydride maléique ou son dérivé ou le mélange de ces composants à l'état fondu ou à l'état de solution avec le composant de départ azoté B.

5. Procédé selon les revendications 3 et 4, caractérisé en ce que l'on ajoute le composant de départ azoté B à l'état pur ou à l'état de solution dans un solvant organique et/ou dans l'eau au composant de départ A.

6. Procédé selon les revendications 4 et 5, caractérisé en ce que l'on utilise en tant que solvants des solvants aprotoniques polaires comme le diméthylformamide, une N-alkylpyrrolidone, le sulfolan ou un gaz à l'état surcritique tel que CO₂

7. Procédé selon les revendications 1 à 6, caractérisé en ce que l'on règle à un niveau situé entre 0,1 et 5,0 le rapport molaire entre l'azote du composant de départ B et l'anhydride maléique ou son dérivé du composant de départ A.

8. Procédé selon les revendications 1 à 6, caractérisé en ce que l'on exploite le dégagement de chaleur du premier et du deuxième stade de réaction pour vaporiser le solvant organique et/ou l'eau et l'eau libérée dans la réaction.

9. Procédé selon les revendications 1 à 8, caractérisé en ce que les composants de départ (A, B) sont envoyés dans un appareil provoquant un mélange rapide, avec une durée de mélange inférieure à 2 s, et en ce que la durée de réaction exothermique des composants de départ (A, B) au premier stade est ensuite inférieure à 60 s.

10. Procédé selon la revendication 9, caractérisé en ce que les composants de départ (A, B) sont envoyés à un mélangeur à jet suivi d'un réacteur tubulaire.

11. Procédé selon la revendication 9, caractérisé en ce que les composants de départ (A, B) sont envoyés à un mélangeur à jet suivi d'un réacteur à tube en hélice à plusieurs phases.

12. Procédé selon les revendications 1 à 9, caractérisé en ce que les composants de départ (A, B) sont mélangés au premier stade de réaction à des températures de 0 à 200°C et en ce que la chaleur dégagée au premier stade de réaction est suffisante pour que le deuxième stade de réaction puisse être exécuté à des températures de 120 à 500°C.

13. Procédé selon les revendications 10 à 12, caractérisé en ce que la température de réaction est réglée par l'intermédiaire de la pression dans le réacteur et des débits d'alimentation des composants de départ (A, B), ainsi que par la teneur en solvant organique ou eau et/ou par un circuit de chauffage/refroidissement.

14. Procédé selon la revendication 11, caractérisé en ce que la durée de passage totale des composants de départ (A, B) et du mélange de réaction au premier et au deuxième stade de réaction est inférieure à 30 min à des températures de 120 à 200°C, inférieure à 10 min à des températures de 200 à 250°C, inférieure à 5 min à des températures de 250 à 300°C et inférieure à 1 min aux températures supérieures à 300°C.

15. Procédé selon les revendications 1 à 7, caractérisé en ce que les motifs succinyle répétés ont le cas échéant l'une des structures suivante : 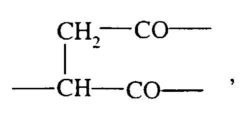 de préférence

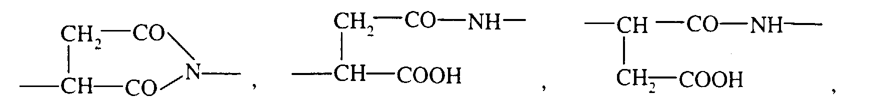

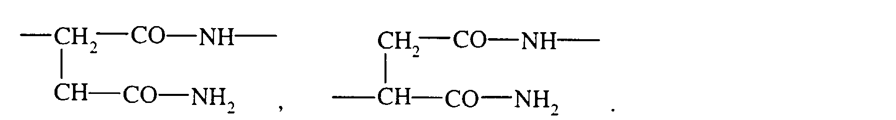

16. Procédé selon les revendications 1 à 14, caractérisé en ce que les composants de départ (A et B), de préférence l'anhydride maléique et l'ammoniac sont mis à réagir, avec un excès molaire de l'ammoniac, et convertis en un polymère contenant des motifs succinyle, le cas échéant des motifs répétés aux structures suivantes : 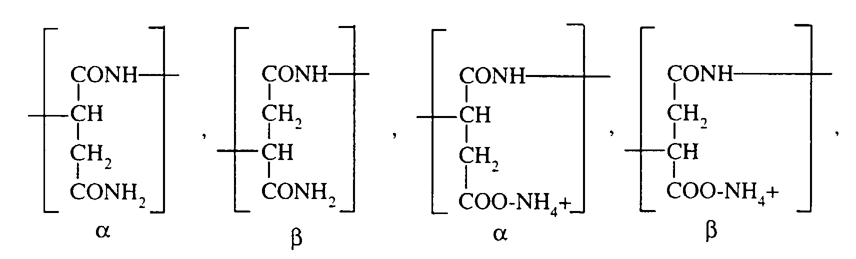 et/ou

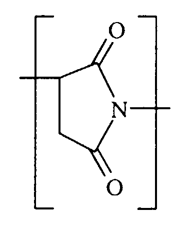

17. Procédé selon la revendication 16, caractérisé en ce que pour 1 mol du composant de départ A, on met en oeuvre 1,8 à 25 mol du composant de départ B.

18. Procédé selon les revendications 1 à 15, caractérisé en ce que l'on introduit en continu, en plus des composants de départ (A, B) d'autres monomères tels que des alcools, des acides dicarboxyliques, des acides polycarboxyliques, des acides monocarboxyliques insaturés, des acides dicarboxyliques insaturés, des acides polycarboxyliques insaturés, des acides aminocarboxyliques, des acides polyaminocarboxyliques, des acides gras, des sucres ou des amines.

19. Procédé selon la revendication 16, caractérisé en ce que les comonomères sont contenus dans le polymère en proportion de 0,1 à 99,9 mol %.

20. Procédé selon les revendications 1 à 19, caractérisé en ce que le polymère obtenu est hydrolysé en la forme acide correspondante.

21. Procédé selon la revendication 20, caractérisé en ce que l'hydrolyse est provoquée par addition d'une base.

22. Procédé selon la revendication 20, caractérisé en ce que l'hydrolyse est réalisée à des températures comprises entre 20°C et le point d'ébullition de la suspension contenant l'acide polyaspartique et à un pH de 5 à 14.

23. Procédé selon les revendications 1 à 21, caractérisé en ce que l'un des composants de départ (A, B) est introduit à plusieurs endroits sur la longueur du réacteur.

24. Procédé selon les revendications 1 à 21, caractérisé en ce que le mélange de réaction partiellement converti est évacué du réacteur et recyclé par un circuit à la première zone de réaction.
